# EUROPEAN PATENT SPECIFICATION

(11) **EP 3 761 058 B1**
(45) Date of publication and mention of the grant of the patent: **07.08.2024**
(21) Application number: 19759968.1
(22) Date of filing: 05.02.2019
(51) Int. Cl.: G01S 15/96

(54) **UNDERWATER DETECTION DEVICE AND UNDERWATER DETECTION METHOD**
VORRICHTUNG ZUR UNTERWASSERDETEKTION UND VERFAHREN ZUR UNTERWASSERDETEKTION
DISPOSITIF DE DÉTECTION SOUS-MARINE ET PROCÉDÉ DE DÉTECTION SOUS-MARINE

(30) Priority: 02.03.2018 JP 2018037495
(43) Date of publication of application: 06.01.2021
(73) Proprietor: FURUNO ELECTRIC CO., LTD., Nishinomiya-City, Hyogo 662-8580 (JP)
(72) Inventor: KOZUKI, Kohei, Nishinomiya-City, Hyogo 662-8580 (JP); EBITA, Yuji, Nishinomiya-City, Hyogo 662-8580 (JP); KAWAJIRI, Takeshi, Nishinomiya-City, Hyogo 662-8580 (JP)
(74) Representative: CSY London
(86) International application number: PCT/JP2019/003977
(87) International publication number: WO 2019/167563

(56) References cited:
- EP-A1- 2 454 607
- EP-A2- 0 971 436
- EP-B1- 2 454 607
- JP-A- 2000 022 424
- JP-A- 2004 212 285
- JP-A- 2014 178 320
- JP-A- 2016 090 453
- JP-A- 2017 227 564
- US-A1- 2006 072 375
- US-A1- 2014 269 192
- US-A1- 2017 315 220

## Description

### TECHNICAL FIELD

The present disclosure relates to an underwater detection apparatus and an underwater detection method which detect underwater.

### BACKGROUND ART

As disclosed in US 9,335,412 B2 (Patent Document 1), it is known that an underwater detection apparatus transmits a fan beam from a transmission element and receives an echo by a reception element.

The underwater detection apparatus disclosed in Patent Document 1 performs transmission and reception processing on a pulse basis while rotating the transmission element and the reception element by a motor. In Patent Document 1, a reception fan beam is completely included within a range of a transmission fan beam in a plan view.

Meanwhile, underwater detection apparatuses utilizing a so-called multi-ping system are known. Also in this multi-ping system, a transmission fan beam may be transmitted and a reception fan beam may be formed by rotating a transmission element and a reception element about a vertical axis by the motor. In such a configuration, it is necessary to expand a transmission horizontal beam width in a rotating direction as an apparatus scanning direction, in order to accelerate an image update cycle at which a detection result is displayed on a screen. By expanding the transmission horizontal beam width, a reflection wave included in a reception beam is quickly detectable, and, as a result, the image update cycle can be accelerated.

Here, it is known to utilize the narrow transmission and reception beams so that underwater is detectable with appropriate resolution. However, since underwater sound speed is slow, the echo will be overlooked if the transmission and reception beams are moved (e.g., the transmission and reception beams are rotated by a PPI sonar). As a measure for reducing such an overlook of the echo, it is possible to expand the transmission beam, while keeping the reception beam narrow, for example, in the configuration of Patent Document 1. With this configuration, even if the transmission and reception beams are rotated, the appropriate resolution is securable and the overlook of the echo is reduced.

However, since the expansion of the transmission beam width induces a reduction in the source level, and as a result, induces a reduction in the detection range, it is more desirable not to expand the transmission beam width as much as possible.

The present disclosure is to solve the problems described above, and one purpose thereof is to provide an underwater detection apparatus and an underwater detection method, capable of both speed-up of an updating cycle of a detection result image and prevention of a reduction in a detection range.

US 2014/269192 A1 discloses a sonar transducer assembly configured for imaging of an underwater environment. The sonar transducer assembly includes a transmit-only transducer element configured to transmit sonar pulses within a first volume and a receive-only transducer element configured to receive sonar returns from the sonar pulses within a second volume. The second volume is smaller than the first volume and is aimed so as to be wholly contained within the first volume. The housing is mountable to a watercraft so as to enable rotation of the transducer elements.
EP 0971436 A2 discloses a millimetre wave radar for use in a vehicle travelling on a road. A primary radiator and a first transmission line combined with the primary radiator are provided on a movable section, a second transmission line electromagnetically combined with the first transmission line and a dielectric lens with a position of the primary radiator serving as a generally focal point surface are provided on a fixed section. A driving mechanism is provided which is capable of causing the movable section to be displaced relative to the fixed section.

According the present invention there is provided an underwater detection apparatus as defined in claim 1 and an underwater detection method as defined in claim 12.

Preferred features of the invention are recited in the dependent claims.

(2) When the motor rotates in the first direction, the one of the pair of edges of the transmission fan-shaped space may be an edge on a trailing side in the rotation direction.

(3) The underwater detection apparatus may further comprise a slip ring configured to prevent twisting of cables connected to the motor during rotation of the motor.

(4) The underwater detection apparatus may further include a second reception transducer configured to receive a reflection wave of the transmission wave within a given second reception fan-shaped space, the second reception fan-shaped space having a third reception width within the first plane and a fourth reception width in the second plane, the fourth reception width being narrower than the second transmission width of the transmission fan-shaped space. In the second plane, another one of the pair of edges of the transmission fan-shaped space, different from the one edge within the first reception fan-shaped space, may be within the second reception fan-shaped space. The motor may be configured to rotate the transmission fan-shaped space, the reception fan-shaped space and the second reception fan-shaped space.

The underwater detection apparatus may further include reception circuitry connected to the reception transducer and to the second reception transducer, and configured to generate a reception signal from the reception wave received by the reception transducer and generate a second reception signal from the reception wave received by the second reception transducer; and processing circuitry configured to generate detection information based on the reception signal and the second reception signal. When the motor rotates in a given first direction, the processing circuitry may generate the detection information based on the reception signal. When the motor rotates in a second direction, different from the first direction, the processing circuitry may generate the detection information based on the second reception signal.

(5) The underwater detection apparatus may further include a second transmission transducer configured to transmit a second transmission wave within a given second transmission fan-shaped space, the second transmission fan-shaped space having a third transmission width in the first plane and a fourth transmission width in the second plane. The second reception width of the reception fan-shaped space may be narrower than the fourth transmission width of the second transmission fan-shaped space, and in the second plane, one of a pair of edges of the second transmission fan-shaped space may be within the reception fan-shaped space. The motor may be configured to rotate the transmission fan-shaped space, the reception fan-shaped space and the second transmission fan-shaped space.

The underwater detection apparatus may further include processing circuitry configured to drive the transmission transducer and the second transmission transducer. When the motor rotates in a first direction, the processing circuitry may drive the transmission transducer. When the motor rotates in a second direction, different from the first direction, the processing circuitry may drive the second transmission transducer.

(6) The transmission fan-shaped space may be a space in which a power of the transmission wave transmitted by the transmission transducer is equal to or higher than half of a maximum power of the transmission wave. The reception fan-shaped space may be a space in which a reception power sensitivity of the reception transducer is equal to or higher than half of a maximum sensitivity of the reception transducer.

(7) The first plane may be a vertical plane, and the second plane may be a horizontal plane.

(8) The first plane may be a plane including a horizontal line, and the second plane may be a vertical plane.

(9) The motor may rotate the transmission fan-shaped space and the reception fan-shaped space about an axis perpendicular to the second plane.

The motor may rotate the transmission fan-shaped space and the reception fan-shaped space by rotating the transmission transducer and the reception transducer.

(10) The transmission transducer and the reception transducer may be different transducers.

(11) A transmission surface of the transmission transducer may be disposed to be oblique with respect to a vertical plane by the transmission transducer being rotated about a first horizontal axis. A reception surface of the reception transducer may be disposed to be oblique with respect to a vertical plane by the reception transducer being rotated about a second horizontal axis. The first horizontal axis and the second horizontal axis may be not in a common vertical plane.

According to the present disclosure, both the speed-up of the updating cycle of the detection result image and the prevention of the reduction in the detection range can be achieved.

### BRIEF DESCRIPTION OF DRAWINGS

Fig. 1 is a block diagram illustrating a configuration of an underwater detection apparatus according to one embodiment of the present disclosure.
Fig. 2 is a perspective view schematically illustrating a substantial part of a wave transceiving unit.
Fig. 3 is a view schematically illustrating a transmission beam formed by a wave transmitter and a reception beam received by a wave receiver.
Fig. 4(A) is a plan view of a ship to which the underwater detection apparatus is mounted, seen in parallel with a second plane, and schematically illustrates a transmission fan-shaped space formed by the wave transmitter and a reception fan-shaped space received by the wave receiver.
Fig. 4(B) is a view illustrating a modification of a relation between the transmission fan-shaped space and the reception fan-shaped space in the second plane.
Fig. 4(C) is a view illustrating a further modification of the relation between the transmission fan-shaped space and the reception fan-shaped space in the second plane.
Fig. 5 is a block diagram illustrating a configuration of a signal processor.
Fig. 6 is a plan view schematically illustrating a substantial part of a first modification of the first embodiment.
Fig. 7 is a flowchart illustrating one example of processing in the first modification of the first embodiment illustrated in Fig. 6.
Fig. 8 is a plan view schematically illustrating a substantial part of a second modification of the first embodiment.
Fig. 9 is a flowchart illustrating one example of processing in the second modification of the first embodiment illustrated in Fig. 8.
Fig. 10 is a block diagram illustrating a configuration of an underwater detection apparatus according to a second embodiment of the present disclosure.
Figs. 11(A) and 11(B) are plan views of the ship to which the underwater detection apparatus is mounted, seen in parallel with a second plane perpendicular to a first plane, and schematically illustrate a transmission fan-shaped space and a reception fan-shaped space, where Fig. 11(A) illustrates a state where a wave transmitter and a wave receiver are rotated in a first direction, and Fig. 11(B) illustrates a state where the wave transmitter and the wave receiver are rotated in the second direction.
Fig. 12 is a flowchart illustrating one example of processing in the second embodiment.

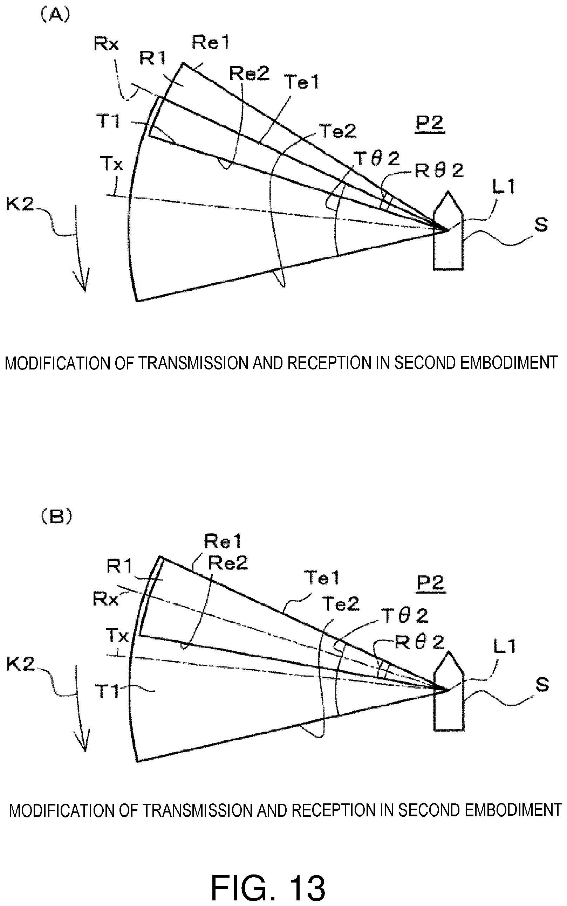

Figs. 13(A) and (B) are plan views of the ship to which the underwater detection apparatus is mounted, seen in parallel with the second plane, and schematically illustrate the transmission fan-shaped space formed by the wave transmitter and the reception fan-shaped space received by the wave receiver, where Fig. 13(A) is a view illustrating a modification of a relation between the transmission fan-shaped space and the reception fan-shaped space in the second plane, and Fig. 13(B) is a view illustrating a further modification of the relation between the transmission fan-shaped space and the reception fan-shaped space in the second plane.
Fig. 14 is a side view schematically illustrating a substantial part of a second modification of the second embodiment, where a part is illustrated in a cross-section.
Fig. 15 is a block diagram illustrating a configuration of an underwater detection apparatus according to a third embodiment of the present disclosure.
Fig. 16 is a view schematically illustrating a transmission beam formed by a wave transmitter and a reception beam received by a wave receiver.

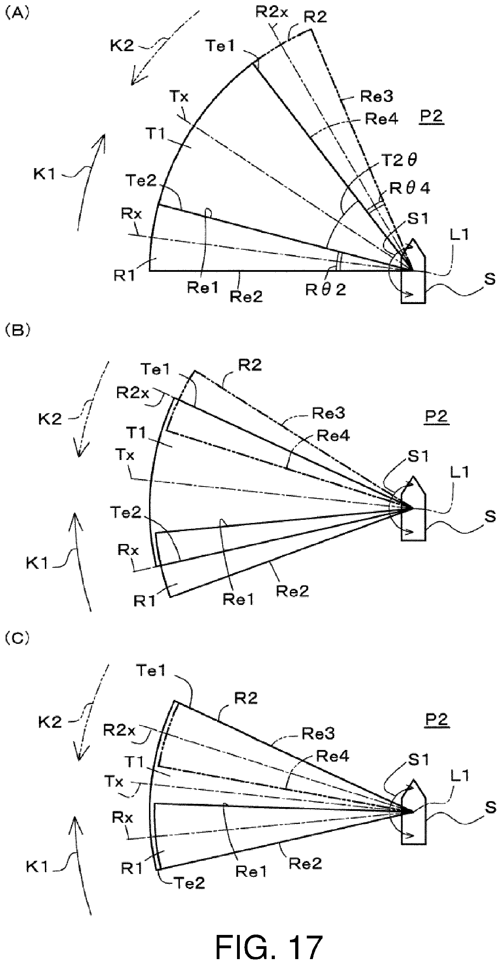

Fig. 17(A) is a plan view of the ship to which the underwater detection apparatus is mounted, seen in parallel with the second plane, and schematically illustrates a transmission fan-shaped space formed by the wave transmitter and a reception fan-shaped space received by the wave receiver, Fig. 17(B) is a view illustrating a modification of a relation between the transmission fan-shaped space and two reception fan-shaped spaces in the second plane, and Fig. 17(C) is a view illustrating a further modification of the relation between the transmission fan-shaped space and the two reception fan-shaped spaces in the second plane.
Fig. 18 is a block diagram illustrating a configuration of an underwater detection apparatus according to a modification of the third embodiment of the present disclosure.
Fig. 19 is a view schematically illustrating a transmission beam formed by the wave transmitter and a second wave transmitter, and a reception beam received by the wave receiver.
Fig. 20 is a plan view of the ship to which the underwater detection apparatus is mounted, seen in parallel with the second plane, and schematically illustrates a transmission fan-shaped space formed by the wave transmitter and a reception fan-shaped space.
Fig. 21 is a view schematically illustrating a substantial part of a further modification of a substantial part of a transducer.
Fig. 22 is a view schematically illustrating an underwater detection apparatus according to a fourth embodiment of the present disclosure.

### DETAILED DESCRIPTION OF EMBODIMENTS OF THE INVENTION

### [First Embodiment]

Hereinafter, an underwater detection apparatus according to a first embodiment of the present disclosure is described with reference to the accompanying drawings. An underwater detection apparatus 1 according to this embodiment of the present disclosure is an ultrasonic detection apparatus of a so-called "multi-ping" system. This multi-ping system is also referred to as a "multi-pulse" system.

General pulse-system underwater detection apparatus transmits a transmission pulse wave, and a wave receiver of the underwater detection apparatus then receives a reflection wave of the transmission pulse wave while the transmission pulse wave goes and comes back in a detection range. Then, after a time for the transmission pulse wave to go and come back in the detection range is lapsed, the subsequent transmission pulse wave is transmitted. On the other hand, the underwater detection apparatus of the multi-ping system first transmits a transmission pulse wave in a given frequency band, and before the transmission pulse wave goes and comes back in the detection range, transmits the subsequent transmission pulse wave in a frequency band different from the given frequency band. The reflection wave of the transmission pulse wave is extracted by a filter corresponding to each frequency band. Therefore, according to the underwater detection apparatus of the multi-ping system, since a wave transmission interval of the transmission pulse wave can be narrowed, a detection cycle of a target object can be accelerated compared with the underwater detection apparatus of the general pulse system.

Note that, in this embodiment, one example in which the underwater detection apparatus 1 utilizes the pulse system is described, but the configuration may be altered. For example, the present disclosure may be applied to an underwater detection apparatus which performs transmission and reception processing on an FMCW (Frequency Modulated Continuous Wave) basis.

For example, the underwater detection apparatus 1 is mounted to the bottom of a ship S, and it is mainly used for detection of a target object, such as a single fish and a school of fish. In addition, the underwater detection apparatus 1 is used for detection of ups and downs of the seabed like a reef, a structure like an artificial fish reef, etc. Moreover, according to this underwater detection apparatus 1, a three-dimensional position and a shape of the target object can be grasped, as will be described later in detail.

### [Entire Configuration]

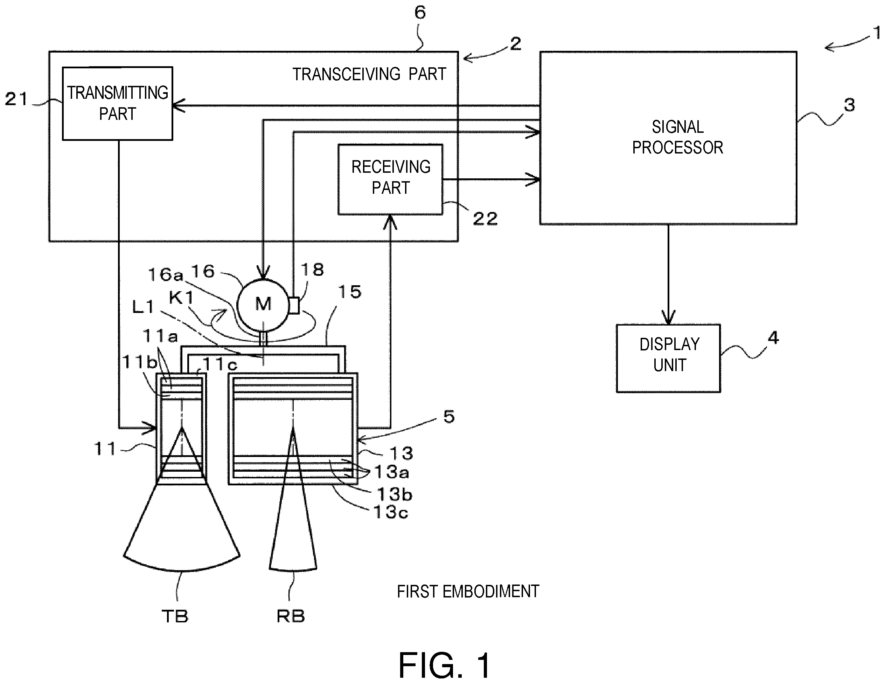

Fig. 1 is a block diagram illustrating a configuration of the underwater detection apparatus 1 according to this embodiment of the present disclosure. As illustrated in Fig. 1, the underwater detection apparatus 1 includes a transceiving device 2, a signal processor 3, and a display unit 4.

### [Configuration of Transceiving Device]

The transceiving device 2 includes a wave transceiving unit 5 and a transceiving part 6.

The wave transceiving unit 5 includes a wave transmitter 11 (may also be referred to as a "transmission transducer"), a wave receiver 13 (may also be referred to as a "reception transducer"), a bracket 15 which supports the wave transmitter 11 and the wave receiver 13, a motor 16 as a rotary driving part, and a rotational angle detecting part 18.

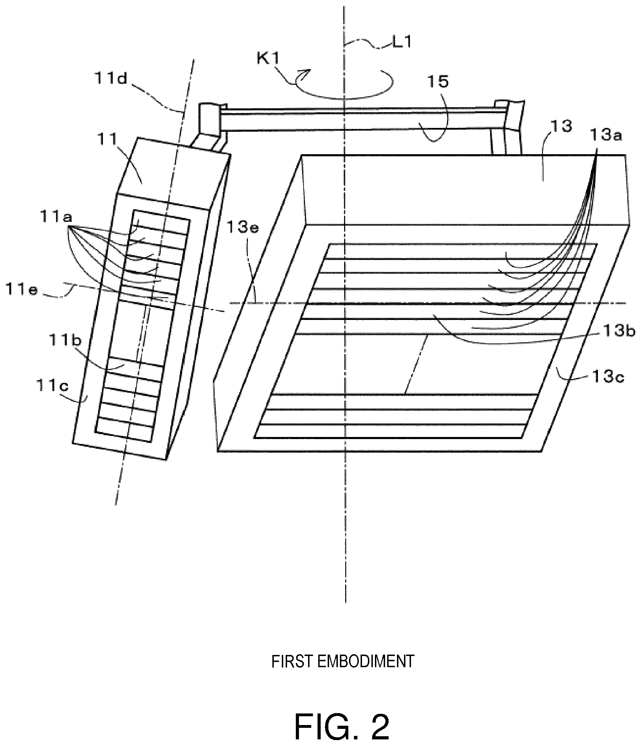

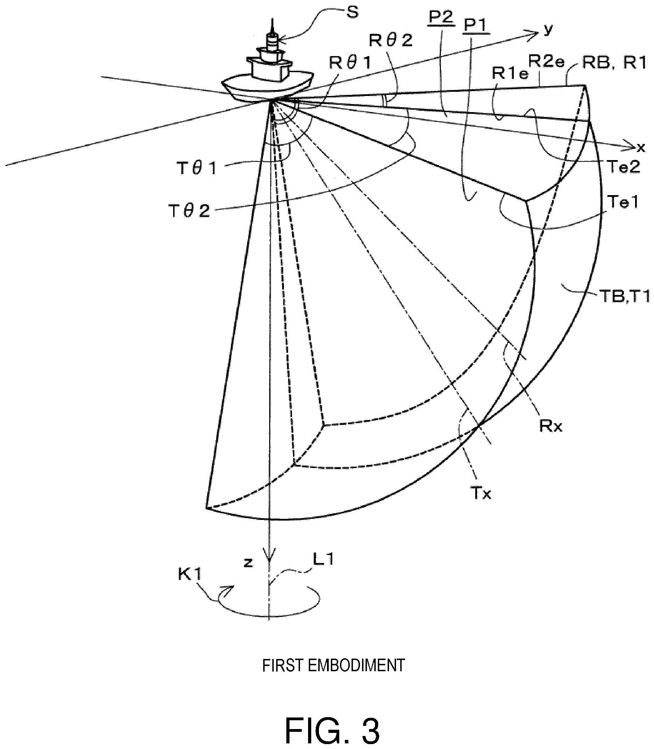

Fig. 2 is a perspective view schematically illustrating a substantial part of the wave transceiving unit 5. Fig. 3 is a view schematically illustrating a transmission beam TB formed by the wave transmitter 11, and a reception beam RB received by the wave receiver 13. Referring to Figs. 1 to 3, the wave transmitter 11 is provided in order to transmit a pulse-shaped ultrasonic wave underwater. The wave transmitter 11 has a wave transmitting surface 11b. This wave transmitting surface 11b is a surface from which the ultrasonic wave is transmitted, is installed in the bottom of the ship S so as to be disposed under the sea surface, and is accommodated in a casing (not illustrated). The wave transmitter 11 has a configuration in which one or more wave transmission elements 11a as an ultrasonic transducer are attached to a casing 11c. In this embodiment, a plurality of wave transmission elements 11a is disposed linearly. That is, the wave transmitter 11 is a linear array.

The wave receiver 13 has a configuration in which one or more wave reception elements 13a as an ultrasonic transducer are attached to a casing 13c. The wave receiver 13 is provided separately from the wave transmitter 11. Each wave reception element 13a has a wave receiving surface 13b. The wave receiving surface 13b is a surface for receiving the ultrasonic wave, is installed in the bottom of the ship S so as to be disposed under the sea surface, and is accommodated in the casing (not illustrated) together with the wave transmitter 11. Each wave reception element 13a receives, as the reception wave, the reflection wave of each transmission pulse wave which is the ultrasonic wave transmitted from the wave transmitter 11, and convert it into an echo signal as an electric signal. In this embodiment, a plurality of wave reception elements 13a is disposed linearly. That is, the wave receiver 13 is a linear array.

In this embodiment, the wave transmitter 11 and the wave receiver 13 are separate components, and therefore, they are mutually different transducers. In this embodiment, a length of the wave reception element 13a of the wave receiver 13 (i.e., a lateral width) is set longer than a length of the wave transmission element 11a of the wave transmitter11 (i.e., a lateral width). The wave transmitter 11 and the wave receiver 13 are supported by the bracket 15 as described above. For example, the bracket 15 is a frame member formed by combining steel members, and is coupled to the casing 11c of the wave transmitter 11 and to the casing 13c of the wave receiver 13.

The wave transmitter 11 is fixed at a given angle position about a given vertical axis 11d with respect to the wave receiver 13. The vertical axis 11d is an axis which extends in the longitudinal direction of the casing 11c, i.e., the array direction of the plurality of wave transmission elements 11a, and penetrates the center of an upper surface and a lower surface of the casing 11c. By setting the angle of the wave transmitter 11 about the vertical axis 11d, a relative position of a transmission fan-shaped (sector-shaped) space T1 and a reception fan-shaped (sector-shaped) space R1, which will be described later, can be set.

Moreover, the wave receiver 13 is fixed to a given angle position about a second given horizontal axis 13e with respect to the wave transmitter 11. The second horizontal axis 13e is an axis which extends in the transverse direction of the casing 13c, i.e., a width direction of the wave reception element 13a, and penetrates the center of both left and right side surfaces of the casing 13c. By setting the angle of the wave receiver 13 about the second horizontal axis 13e, a direction of the reception fan-shaped space R1 with respect to the seabed surface can be set optimally.

Moreover, the wave transmitter 11 is fixed to a given angle position about a given first horizontal axis 11e with respect to the wave receiver 13. The first horizontal axis 11e is an axis which extends in the transverse direction of the casing 11c, i.e., in the width direction of the wave transmission element 11a, and penetrates the center of both left and right side surfaces of the casing 11c. By setting the angle of the wave transmitter 11 about the first horizontal axis 11e, a direction of the transmission fan-shaped space T1 with respect to the seabed surface can be set optimally.

A vertical plane which includes the first horizontal axis 11e and a vertical plane which includes the second horizontal axis 13e is different from each other.

As described above, by the wave transmitter 11 being rotated with respect to the first horizontal axis 11e, the wave transmitting surface 11b of the wave transmitter 11 is disposed obliquely to the vertical plane. Moreover, by the wave receiver 13 being rotated with respect to the second horizontal axis 13e, the wave receiving surface 13b of the wave receiver 13 is disposed obliquely to the vertical plane. The first horizontal axis 11e and the second horizontal axis 13e are not included in the common vertical plane. The wave transmitter 11 and the wave receiver 13 are integrally rotated by the motor 16.

In this embodiment, the motor 16 drives the wave transmitter 11 and the wave receiver 13 to rotate them with the bracket 15 about a rotation axis L1 which is the center axis extending in the vertical direction. The motor 16 is a motor of which the rotational position is controllable, such as a stepping motor, a servo motor, etc. The motor 16 is driven in response to an operational instruction from the signal processor 3, by drive current according to this operational instruction. An output shaft 16a of the motor 16 is coupled to the bracket 15 so that power transfer is possible, and the wave transmitter 11 and the wave receiver 13 rotate along a horizontal plane perpendicular to the vertical direction. In this embodiment, a rotating direction of the motor 16 is fixed, and is a first direction K1 which is one of the rotating directions about the rotation axis L1. In this embodiment, a slip ring is used so that a twist does not occur on cables connected to the motor 16 due to the fixation of the rotating direction of the motor 16. In this embodiment, the motor 16 continuously rotates the wave transmitter 11 and the wave receiver 13. However, without being limited to this configuration, the motor 16 may repeat a rotation and a stop or a suspension so that it repeats an operation in which it rotates by a given angle at every given time interval and suspends for a given period of time after the rotation.

The rotating speed of the motor 16 when the underwater detection is performed is set as the normal rotating speed. The normal rotating speed in this case means a rotating speed required for transmitting and receiving the echo using the multi-pin technology. For example, the rotating speed (angle/time) is set to below "wave receiving horizontal beam width" / "round-trip propagation time of sound wave in a range where the reception wave detection is to be carried out / speed-up rate."

The rotational angle detecting part 18 is attached to the motor 16. Note that the rotational angle detecting part 18 may be attached to the motor 16, or may be disposed separately from the motor 16. For example, an encoder is used as the rotational angle detecting part 18. However, without being limited to this configuration, the signal for controlling the rotation of the motor 16 may be analyzed and converted into angular information. In detail, if the stepping motor is used as the motor 16, the number of instruction pulses inputted into the stepping motor may be counted and converted into the angular information. In the underwater detection apparatus 1, the angle position of the wave transmitter 11 and the wave receiver 13 in ϕ-direction is calculated based on the rotational angle of the motor 16 detected by the rotational angle detecting part 18. Note that the ϕ-direction is a direction about the rotation axis L1 of the motor 16.

The wave transmitter 11 forms the transmission fan-shaped space T1 which is a range or space to which the three-dimensional transmission beam TB is outputted as illustrated in Fig. 3. The transmission fan-shaped space T1 is a substantially fan-shaped beam. That is, the wave transmitter 11 transmits the transmission wave in the transmission fan-shaped space T1. The transmission fan-shaped space T1 is a range or space which includes a center axis Tx at which transmission signal power of the transmission wave transmitted from the wave transmitter 11 becomes the maximum, and where the transmission signal power is halved to -3dB from the maximum. In this embodiment, the wave transmitter 11 is provided to the ship's bottom so that the center axis Tx of the transmission fan-shaped space T1 becomes oblique to the vertical direction (z-axis direction in Fig. 3). Note that the transmission fan-shaped space T1 may be a range where the transmission signal power is reduced by -nldB (n1 is set according to a detection target object etc. of the underwater detection apparatus 1) from the maximum.

The transmission fan-shaped space T1 has a first transmission width Tθ1 within a given first plane P1, and have a second transmission width Tθ2 in a second plane P2 perpendicular to the first plane P1. The first transmission width Tθ1 is wider than the second transmission width Tθ2. The transmission fan-shaped space T1 is formed in the fan shape in both the first plane P1 and the second plane P2. In this embodiment, the first plane P1 is a vertical plane including the rotation axis L1 of the motor 16. Moreover, in this embodiment, the second plane P2 is a horizontal plane. The first transmission width Tθ1 is an angle width centering on the wave transmitter 11. The second transmission width Tθ2 is an angle width about the rotation axis L1 of the motor 16.

Note that, as described above, when the transmission signal power at edges Te1 and Te2 of the transmission fan-shaped space T1 is a magnitude which is -3dB from the transmission signal power at the center axis Tx, the second transmission width Tθ2 < the first transmission width Tθ1. On the other hand, for example, when the transmission signal power at the edges Te1 and Te2 of the transmission fan-shaped space T1 is a magnitude which is -10dB which is smaller than -3dB, from the transmission signal power at the center axis Tx, it is possible to have the second transmission width Tθ2 > the first transmission width Tθ1.

An angle formed by a direction which is perpendicular to the wave transmitting surface 11b of the linear array and in which the transmission fan-shaped space T1 is formed, and the horizontal plane, may be any angle as long as it is within a range from 0° which is an angle in case where the linear array is disposed in the vertical direction to 90° which is an angle in case where the linear array is disposed in the horizontal direction.

The wave receiver 13 receives a signal of the reception fan-shaped space R1 where the three-dimensional reception beam RB is formed as illustrated in Fig. 3. The reception fan-shaped space R1 is a substantially fan-shaped beam. That is, the wave receiver 13 receives, within the reception fan-shaped space R1, the reception wave which is the reflection wave of the transmission wave. The reception fan-shaped space R1 is a range or space which includes a center axis Rx at which reception power sensitivity of the wave receiver 13 becomes the maximum, and where the reception power sensitivity of the wave receiver 13 is halved from the maximum to -3dB. In this embodiment, the wave receiver 13 is provided to the ship's bottom so that the center axis Rx of the reception fan-shaped space R1 becomes oblique to the vertical direction (the z-axis direction in Fig. 3). Note that the reception fan-shaped space R1 may be a range where the reception power sensitivity is reduced from the maximum by -n2dB (n2 is set according to the detection target object etc. of the underwater detection apparatus 1).

The motor 16 rotates the transmission fan-shaped space T1 and the reception fan-shaped space R1 about the rotation axis L1 which is the axis perpendicular to the second plane P2. In detail, the motor 16 rotates the transmission fan-shaped space T1 and the reception fan-shaped space R1 by rotating the wave transmitter 11 and the wave receiver 13.

The wave receiver 13 of this embodiment performs a detection by the thin reception beam RB which scans electronically inside the reception fan-shaped space R1 as the fan-shaped space in which the linear array of the wave receiver 13 has a gain by performing a beam forming with the transceiving part 6 and the signal processor 3 which will be described in detail below.

The reception fan-shaped space R1 has a first reception width Rθ1 within the first plane P1 and a second reception width Rθ2 in the second plane P2, and the first reception width Rθ1 is wider than the second reception width Rθ2. Further, the second reception width Rθ2 of the reception fan-shaped space R1 is narrower than the second transmission width Tθ2 of the transmission fan-shaped space T1 (Rθ2<Tθ2). The reception fan-shaped space R1 is formed in the fan shape both in the first plane P1 and the second plane P2. The first reception width Rθ1 is an angle width centering on the wave transmitter 11. The second reception width Rθ2 is an angle width about the rotation axis L1 of the motor 16.

Note that, as described above, when the reception power sensitivity at edges Re1 and Re2 of the reception fan-shaped space R1 is the magnitude of -3dB from the reception power sensitivity at the center axis Rx, the second reception width Rθ2 < the first reception width Rθ1. On the other hand, for example, when the reception power sensitivity at the edges Re1 and Re2 of the reception fan-shaped space R1 is the magnitude of -10dB from the reception power sensitivity at the center axis Rx, which is smaller than -3dB, it is possible to have the second reception width Rθ2 > the first reception width Rθ1.

The first transmission width Tθ1 and the first reception width Rθ1 are not limited in particular as long as they are within a range of 6° to 90°. Although the second transmission width Tθ2 is, for example, 36°, it is not limited to this width, and may be several tens of degrees less than 90° as long as it is larger than the second reception width Rθ2. For example, the second reception width Rθ2 is set to 6°.

An angle formed by a direction perpendicular to the wave receiving surface 13b of the linear array and in which the reception fan-shaped space R1 is formed, and the horizontal plane, may be any angle, as long as it is within a range from 0° which is an angle in case where the linear array is disposed in the vertical direction to 90° which is an angle in case where the linear array is disposed in the horizontal direction.

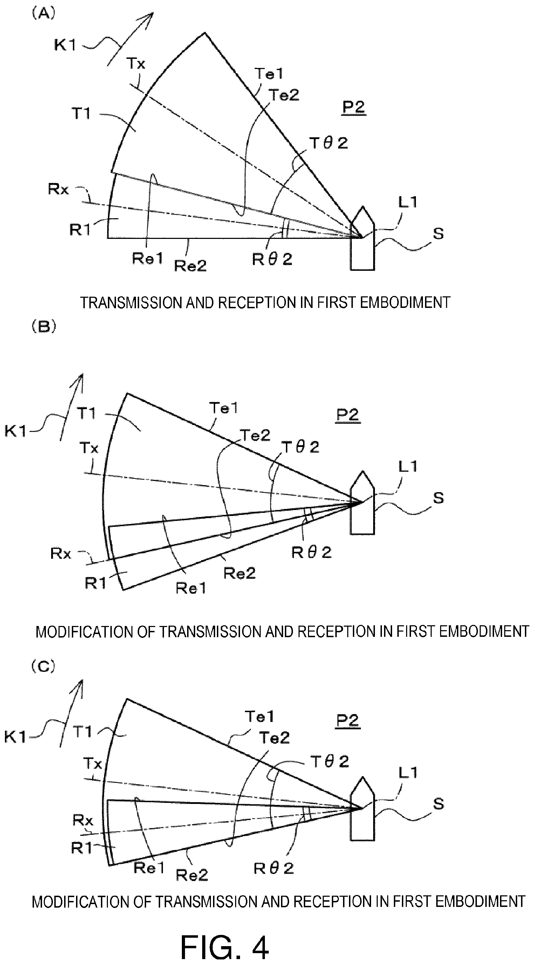

Fig. 4(A) is a plan view of the ship S to which the underwater detection apparatus 1 is mounted, seen in parallel with the second plane P2, and schematically illustrates the transmission fan-shaped space T1 formed by the wave transmitter 11 and the reception fan-shaped space R1 received by the wave receiver 13. Note that, in each of Figs. 4(A) to 4(C), although a distance from the ship S to a tip end of the transmission fan-shaped space T1 differs from a distance from the ship S to a tip end of the reception fan-shaped space R1, this difference is for the sake of facilitating the illustration and does not necessarily show the actual ranges accurately. Referring to Figs. 1 to 4(A), in the plan view, the transmission fan-shaped space T1 and the reception fan-shaped space R1 are rotated covering all the directions around the ship S by the wave transmitter 11 and the wave receiver 13 rotating about the rotation axis L1 in the first direction K1 in connection with the rotation of the motor 16.

The underwater detection apparatus 1 calculates rotational angular positions of the wave transmitter 11 and the wave receiver 13 about the rotation axis L1 based on the rotational angle of the motor 16 detected by the rotational angle detecting part 18.

In the second plane P2, the central line Tx of the transmission fan-shaped space T1 is a line at which the transmission signal power is the highest in the transmission fan-shaped space T1. On the other hand, the first transmission edge Te1 and the second transmission edge Te2 as a pair of edges of the transmission fan-shaped space T1 about the rotation axis L1 in the second plane P2 are lines at positions where the transmission signal power is the lowest in the transmission fan-shaped space T1. The transmission signal power at these transmission edges Te1 and Te2 is a half of the transmission signal power at the center axis Tx. For example, when the motor 16 rotates, in the plan view, in the first direction K1 as a clockwise direction, the first transmission edge Te1 is a leading edge or front edge in the first direction K1 and the second transmission edge Te2 is a trailing edge or back edge in the first direction K1.

In the second plane P2, the center axis Rx of the reception fan-shaped space R1 is a line at which the reception power sensitivity is the highest in the reception fan-shaped space R1. On the other hand, about the rotation axis L1 in the second plane P2, the first reception edge Re1 and the second reception edge Re2 as a pair of edges of the reception fan-shaped space R1 are lines at positions where the reception power sensitivity is the lowest in the reception fan-shaped space R1. In this embodiment, the reception power sensitivity at the reception edges Re1 and Re2 is a half of the reception power sensitivity at the center axis Rx. When the motor 16 rotates in the first direction K1, the first reception edge Re1 is the leading edge or front edge in the first direction K1 and the second reception edge Re2 is the trailing edge or back edge in the first direction K1.

In this embodiment, in the second plane P2, at least a part of the reception fan-shaped space R1 is located in the transmission fan-shaped space T1.

In detail, in the second plane P2, the transmission edge Te2 of the pair of the transmission edges Te1 and Te2 of the transmission fan-shaped space T1 is located in the reception fan-shaped space R1. In this embodiment, the wave transmitter 11 and the wave receiver 13 are configured so that the second transmission edge Te2, which is the trailing edge in the first direction K1, is overlapped with the first reception edge Re1, which is the leading edge in the first direction K1. That is, in the second plane P2, the first reception edge Re1 is located on the second transmission edge Te2 which is on the trailing side of the transmission fan-shaped space T1 in the rotational direction. In this configuration, although the transmission fan-shaped space T1 and the reception fan-shaped space R1 are overlapped with each other at the second transmission edge Te2 and the first reception edge Re1, they are not overlapped with each other at other positions. Moreover, in the second plane P2, the center axis Tx of the transmission fan-shaped space T1 are not overlapped with the reception fan-shaped space R1, and the center axis Rx of the reception fan-shaped space R1 are not overlapped with the transmission fan-shaped space T1.

As described above, in the second plane P2, the reception fan-shaped space R1 is offset to one side of the transmission fan-shaped space T1 in the first direction K1 (in detail, to the rearward or backward side in the first direction K1).

Note that, relations other than the relation between the transmission fan-shaped space T1 and the reception fan-shaped space R1 which is illustrated in Fig. 4(A) may be established. One example of such a relation is described with reference to Fig. 4(B).

Fig. 4(B) is a view illustrating a modification of the relation between the transmission fan-shaped space T1 and the reception fan-shaped space R1 in the second plane P2. In this modification, the wave transmitter 11 and the wave receiver 13 are configured so that the second transmission edge Te2, which is the trailing edge in the first direction K1, is overlapped with the reception fan-shaped space R1 at positions other than the first reception edge Re1. In this modification, the second transmission edge Te2 and the center axis Rx of the reception fan-shaped space R1 are overlapped with each other in the second plane P2. Moreover, in the second plane P2, a substantially half the reception fan-shaped space R1 are overlapped with the transmission fan-shaped space T1. The second reception edge Re2 are not overlapped with the transmission fan-shaped space T1. Moreover, the center axis Tx of the transmission fan-shaped space T1 are not overlapped with the reception fan-shaped space R1.

Further, a relation different from the one illustrated in Fig. 4(B) may be established.

For example, referring to Fig. 4(C) which illustrates a further modification of the relation between the transmission fan-shaped space T1 and the reception fan-shaped space R1 in the second plane P2, a space where the transmission fan-shaped space T1 and the reception fan-shaped space R1 are overlapped with each other is larger than that in the modification illustrated in Fig. 4(B). In the modification illustrated in Fig. 4(C), in the second plane P2, the second transmission edge Te2 and the second reception edge Re2, which are the trailing edges of the transmission fan-shaped space T1 and the reception fan-shaped space R1 in the first direction K1, respectively, are overlapped with each other. The center axis Tx of the transmission fan-shaped space T1 are not overlapped with the reception fan-shaped space R1. On the other hand, the center axis Rx of the reception fan-shaped space R1 are overlapped with the transmission fan-shaped space T1. According to such a configuration, the entire space of the reception fan-shaped space R1 is located within the transmission fan-shaped space T1.

Next, a configuration of the transceiving part 6 is described. Referring to Fig. 1, the transceiving part 6 includes a transmitting part 21 and a receiving part 22 (also be referred to as a reception circuitry).

The transmitting part 21 amplifies a transmission pulse signal generated by the signal processor 3, and applies the amplified signal to the wave transmitter 11 as an amplified transmission pulse signal. Therefore, from the wave transmitter 11, the transmission pulse waves corresponding to the respective amplified transmission pulse signals are transmitted. In detail, in this embodiment, from the wave transmitter 11, a first transmission pulse wave corresponding to a first amplified transmission pulse signal, a second transmission pulse wave corresponding to a second amplified transmission pulse signal, and a third transmission pulse wave corresponding to a third amplified transmission pulse signal is transmitted with a given time interval therebetween. The frequencies of the first to third transmission pulse waves are different from each other.

The receiving part 22 amplifies the echo signal as an electric signal outputted from the wave receiver 13, and carries out an A/D conversion of the amplified echo signal. Then, the receiving part 22 outputs the echo signal converted into the digital signal to the signal processor 3. In more detail, the receiving part 22 has a plurality of reception circuitries. Each reception circuitry performs the given processing described above to the corresponding echo signal (reception signal) acquired by converting the reception wave received by the corresponding wave reception element 13a into the electric signal, and then output the corresponding echo signal to the signal processor 3.

### [Configuration of Display Unit]

The display unit 4 displays on a display screen an image according to an image data outputted from the signal processor 3. In this embodiment, the display unit 4 displays an underwater state below the ship three-dimensionally as a bird's-eye view. Therefore, the user can guess the underwater state below the ship (e.g., the existence and the positions of a single fish and a school of fish, ups and downs of a seabed, and a structure such as an artificial fish reef) by looking at the display screen.

### [Configuration of Signal Processor]

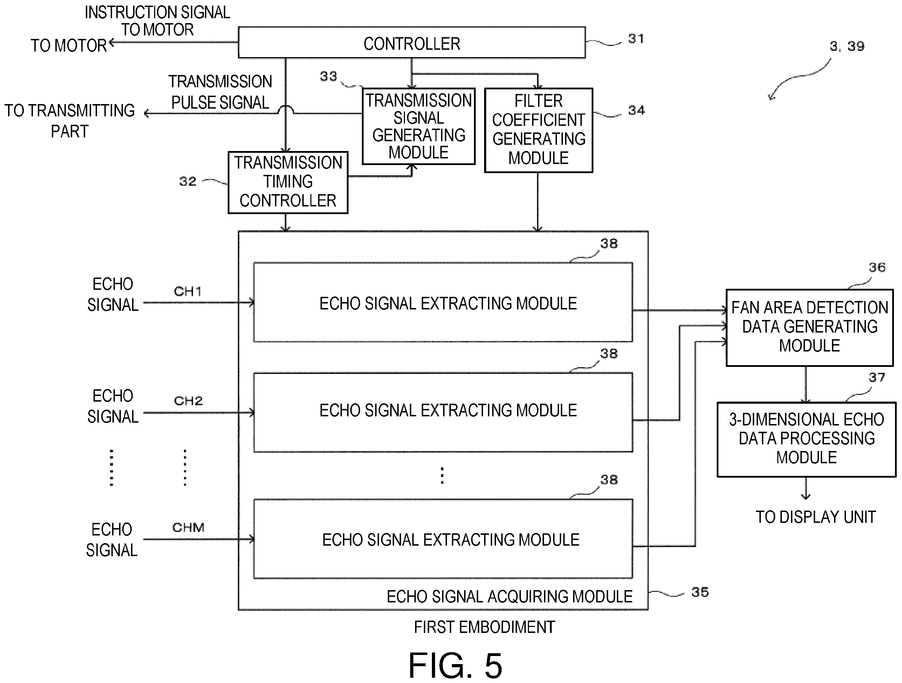

Fig. 5 is a block diagram illustrating a configuration of the signal processor 3. Referring to Figs. 1 and 5, the signal processor 3 generates the transmission pulse signal as the transmission signal, and inputs it into the transmitting part 21. Moreover, the signal processor 3 processes the echo signal outputted from the receiving part 22, and generates the image data of the target object.

The signal processor 3 includes a controller 31, a transmission timing controller 32, a transmission signal generating module 33, a filter coefficient generating module 34, an echo signal acquiring module 35, a fan area detection data generating module 36 as an image data generating module, and a three-dimensional echo data processing module 37 as a synthetic image data generating module.

The signal processor 3 is comprised of devices, such as a hardware processor 39 (a CPU, an FPGA, etc.) and a nonvolatile memory, and is one example of a "processing circuitry" of the present disclosure. For example, the CPU reads the program from the nonvolatile memory and executes it to function the signal processor 3 as the controller 31, the transmission timing controller 32, the transmission signal generating module 33, the filter coefficient generating module 34, the echo signal acquiring module 35, the fan area detection data generating module 36, and the three-dimensional echo data processing module 37.

The controller 31 outputs a variety of information to the transmission timing controller 32, the transmission signal generating module 33, and the filter coefficient generating module 34.

The controller 31 notifies to the transmission timing controller 32 timings at which the transmission timing controller 32 is to output first to third transmitting triggers.

Moreover, the controller 31 outputs information on frequency bands of the first to third transmission pulse signals to be generated by the transmission signal generating module 33 to the transmission signal generating module 33 and the filter coefficient generating module 34. The controller 31 outputs a first frequency band, a second frequency band, and a third frequency band which are three frequency bands different from each other, as the frequency bands of the first transmission pulse signal, the second transmission pulse signal, and the third transmission pulse signal, respectively, to the transmission signal generating module 33 and the filter coefficient generating module 34.

Moreover, the controller 31 outputs a filter specification for generating a filter coefficient used by the filtering performed by the echo signal acquiring module 35 to the filter coefficient generating module 34. Such a filter specification includes a center frequency of a passband, a bandwidth of the passband, a reduction level of a stop band, and a filter length.

The transmission timing controller 32 generates the first to third transmitting triggers at the timings instructed from the controller 31, and then sequentially output the transmitting triggers to the transmission signal generating module 33 and the echo signal acquiring module 35.

Each time the transmission signal generating module 33 receives the first to third transmitting triggers, it generates the first transmission pulse signal, the second transmission pulse signal, and the third transmission pulse signal corresponding to the trigger signals in this order, and then outputs them to the transmitting part 21. The first to third transmission pulse signals outputted to the transmitting part 21 are amplified by the transmitting part 21, and they are transmitted from the wave transmitter 11 as the first to third transmission pulse waves, respectively.

The filter coefficient generating module 34 generates the filter coefficients for extracting the first to third echo signals obtained from the respective reflection waves of the first to third transmission pulse waves, based on the information on the first to third frequency bands and the filter specification which are notified from the controller 31.

The controller 31 outputs an instruction signal to the motor 16 to control operation of the motor 16. In this embodiment, the controller 31 controls the rotating direction, the rotating speed, and the rotational position of the motor 16. That is, the controller 31 controls the rotating direction, the rotating speed, and the rotational position of the wave transmitter 11 and the wave receiver 13. The controller 31 sets a target output value according to a given operational condition. Then, the controller 31 causes the rotational angle detecting part 18 to detect the rotational position of the output shaft 16a of the motor 16, and control the motor 16 so that a deviation of the detected value and the target output value becomes zero.

The echo signal acquiring module 35 acquires the echo signal in each frequency band from the echo signal outputted from the wave receiver 13. The echo signal acquiring module 35 has the same number of echo signal extracting modules 38 as the number of wave reception elements 13a provided to the wave receiver 13. The echo signal extracting modules 38 are provided corresponding to the respective wave reception elements 13a.

The processings performed by the echo signal extracting modules 38 are the same except for the wave reception elements 13a from which the echo signals are outputted being different from each other, and the echo signals outputted through the channels CHm (here, m= 1, 2, ..., M) from the wave reception elements 13a being different from each other.

The fan area detection data generating module 36 performs a beam forming based on M echo signals acquired from the echo signal extracting modules 38. A case where a delay-and-sum beam forming is performed is described as one example of the beam forming. The reception beam RB can be formed by adding the echo signals after a given phase rotation is given to each echo signal. By changing an amount of the phase rotation given to each echo data to change a directivity of the reception beam RB in the reception fan-shaped space R1 (i.e., by scanning electronically), the echo intensity at each angle ϕ about the rotation axis L1 can be obtained. The fan area detection data generating module 36 can calculate the echo intensity at each position in a range specified by a distance r from the ship and the angle ϕ, by obtaining the echo intensity at each angle ϕ in the distance r. Note that, below, the echo intensity is also referred to as the "fan area echo intensity."

Then, the fan area detection data generating module 36 calculates the fan area echo intensity at each of a plurality of angle positions about the rotation axis L1, where the reception fan-shaped space R1 can be located by being rotated by the motor 16, and generates a plurality of image data based on the fan area echo intensities.

The three-dimensional echo data processing module 37 synthesizes the image data at every angle position about the rotation axis L1 generated by the fan area detection data generating module 36 to generate synthetic image data. This synthetic image data is outputted to the display unit 4. Then, the display unit 4 displays an image specified by the synthetic image data.

With the above configuration, the underwater detection apparatus 1 can detect the target object in the three-dimensional space covering the large area centering on the ship S, and estimate the three-dimensional position of the target object in this space.

### [Effects]

As described above, according to the underwater detection apparatus 1 of this embodiment, in the second plane P2, the second transmission edge Te2 which is one edge of the transmission fan-shaped space T1 is located within the reception fan-shaped space R1. According to this configuration, the reception fan-shaped space R1 is offset to one side of the transmission fan-shaped space T1 in the rotating direction about the rotation axis L1 (rearward or backward side in the first direction K1 in this embodiment). With this configuration, the reception wave corresponding to the transmission pulse wave transmitted from the wave transmitter 11 to the transmission fan-shaped space T1 can be received in the reception fan-shaped space R1 after a sufficient time has passed from the start of the transmission of the transmission wave pulse. As a result, compared with the configuration in which the signals received by the reception fan-shaped space R1 are increased simply by widening the second transmission width Tθ2 of the transmission fan-shaped space T1, the second transmission width Tθ2 of the transmission fan-shaped space T1 can be narrowed. By narrowing the second transmission width Tθ2, since the transmission pulse wave can reach a more distant location, the reduction in the maximum detection range can be prevented. Further, since the second transmission width Tθ2 of the transmission fan-shaped space T1 can be narrowed, the transmitting cycle of the transmission fan-shaped space T1, i.e., the updating cycle of the detection result image can further be shortened. As a result, the underwater detection apparatus 1 capable of achieving both the speed-up of the updating cycle of the detection result image and the prevention of the reduction in the detection range can be achieved.

Moreover, according to the underwater detection apparatus 1, the second transmission width Tθ2 of the transmission fan-shaped space T1 can greatly be narrowed to approximately half compared with the conventional underwater detection apparatus. As a result, since the wave transmission sensitivity of the wave transmitter 11 can be increased, the detection range can further be expanded. Further, since the second transmission width Tθ2 is narrow, drive time of the wave transmitter 11 can further be shortened. As a result, the amount of heat generated by the transmitting operation can further be lessened.

Moreover, according to the underwater detection apparatus 1, when the motor 16 rotates in the first direction K1, the second transmission edge Te2 of the transmission fan-shaped space T1 is the trailing edge in the first direction K1 in the second plane P2. With this configuration, the transmission fan-shaped space T1 can be disposed in a wider range on forward or front side of the reception fan-shaped space R1 in the rotating direction K1. As a result, the second transmission width Tθ2 of the transmission fan-shaped space T1 can further be narrowed, while reducing more certainly that the omission in the reception of the transmission pulse wave occurs in the reception fan-shaped space R1.

Moreover, according to the underwater detection apparatus 1, the motor 16 rotates the wave receiver 13 in the direction perpendicular to the plane in which the beam forming is performed. Therefore, the underwater three-dimensional range can be detected appropriately.

### [First Modification of First Embodiment]

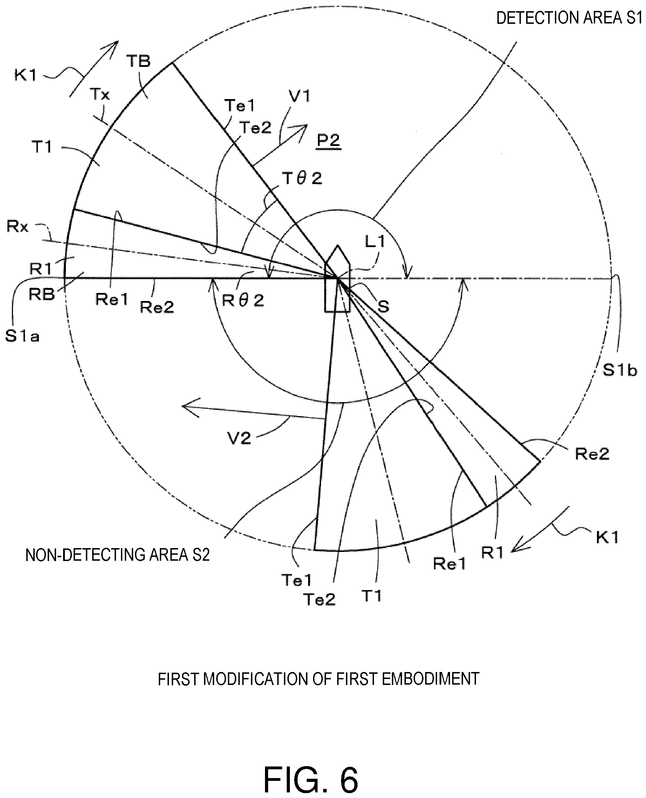

Fig. 6 is a plan view schematically illustrating a substantial part of a first modification of the first embodiment. Note that, below, differences from the above embodiment will mainly be described. Like reference characters are denoted in the figures for similar configurations as this embodiment to omit the detailed description.

In the first embodiment, the rotating direction of the motor 16 is fixed in the first direction K1. The underwater detection is performed by the underwater detection apparatus 1 in all the ranges about the rotation axis L1. However, the underwater detection may be performed only in a partial range about the rotation axis L1 (e.g., a sector range of 90° or 180°). In such a case, if the motor 16 rotates also in the non-detecting range about the rotation axis L1 similarly to the detection range, a dead time occurs. A configuration for shortening such a dead time is adopted in this first modification of the first embodiment. That is, a configuration for increasing the image update cycle is adopted.

Referring to Figs. 1 and 6, according to the configuration in the first modification of the first embodiment, the underwater detection apparatus 1 increases the rotating speed of the motor 16 in a non-detecting mode other than when displaying the image in a sector detecting mode. Thus, the image update cycle in this modification can be increased more than the image update cycle during all-direction detection.

In this modification, (1) in the sector detecting mode, the motor 16 rotates at a first speed V1 to mechanically scan a detection area S1 → (2) in the non-detecting mode, the motor 16 rotates at a second speed V2 faster than the first speed V1 (at this time, the image is not updated) → (1) → (2) are repeated.

In the following, otherwise described in particular, a state where the second plane P2 is seen from above as illustrated in Fig. 6 is described. In this modification, the detection area S1 and a non-detection area S2 are set. Data indicative of the detection area S1 and the non-detection area S2 is stored in the memory etc. of the signal processor 3. One or more kinds of detection area S1 may be set when the underwater detection apparatus 1 is shipped out from a factory, or the type may be arbitrarily set by the user of the underwater detection apparatus 1.

For example, in this modification, the detection area S1 and the non-detection area S2 are each set so as to extend in a range of 180° about the rotation axis L1. The controller 31 performs the same detection as described in the first embodiment when the underwater detection is performed in the detection area S1. On the other hand, the controller 31 rotates the motor 16 but suspends the image data generation during not detecting in the non-detection area S2.

In this modification illustrated in Fig. 6, the rotating direction of the motor 16 is the first direction K1 and it is fixed. The controller 31 rotates the motor 16 in the first direction K1 at the given first speed V1 when the underwater detection is performed using the wave transceiving unit 5, and rotates the motor 16 at the second speed V2 faster than the first speed V1 when the underwater detection is not performed.

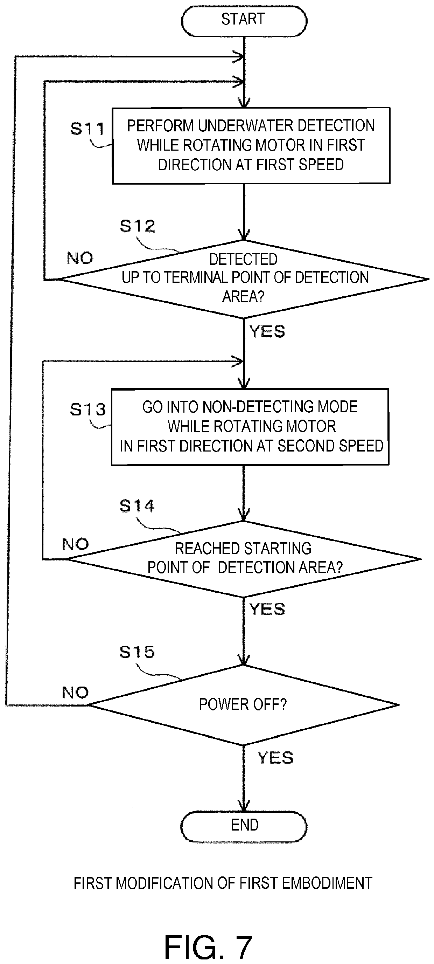

Fig. 7 is a flowchart illustrating one example of processing in the first modification of the first embodiment illustrated in Fig. 6. Below, a case where the detection is performed from a starting point S1a of the detection area S1 is described as one example. Referring to Figs. 1, 6, and 7, the controller 31 performs the detection control, while rotating the motor 16 in the first direction K1 at the first speed V1 by controlling the motor 16 etc. (Step S11). Therefore, the transmission pulse wave is transmitted from the wave transmitter 11 to the transmission fan-shaped space T1, and the reflection wave in the reception fan-shaped space R1 is received by the wave receiver 13.

Then, the controller 31 refers to the rotational position of the motor 16 indicated by the rotational angle detecting part 18 and determine whether the detection is performed up to a terminal point S1b of the detection area S1 in the first direction K1 (Step S12). If the detection has not yet performed up to the terminal point S1b of the detection area S1 (NO at Step S12), the control at Step S11 is repeated. On the other hand, if the detection is performed up to the terminal point S1b of the detection area S1 (YES at Step S12), the controller 31 goes into the non-detecting mode (Step S13). In the non-detecting mode, for example, the controller 31 rotates the motor 16 in the first direction K1 at the second speed V2 faster than the first speed V1, and suspends the image data generation (Step S13).

Note that, in the non-detecting mode, the transmission pulse wave may be or may not be transmitted from the wave transmitter 11. Moreover, in the non-detecting mode, the reception may be or may not be performed by the wave receiver 13. The operation patterns of the wave transmitter 11 and the wave receiver 13 in the non-detecting mode are the following four patterns. That is, the patterns are (1) the wave receiver 13 is ON when the wave transmitter 11 is turned ON, (2) the wave receiver 13 is OFF when the wave transmitter 11 is turned ON, (3) the wave receiver 13 is ON when the wave transmitter 11 is turned OFF, and (4) the wave receiver 13 is OFF when the wave transmitter 11 is turned OFF.

The controller 31 repeats the control at Step S13 until the motor 16, the wave transmitter 11, and the wave receiver 13 reach the starting point S1a of the detection area S1 about the rotation axis L1 (NO at Step S14), while referring to the rotational position of the motor 16 indicated by the rotational angle detecting part 18. That is, the non-detecting mode at Step S13 is maintained. Then, if the motor 16, the wave transmitter 11, and the wave receiver 13 reach the starting point S1a of the detection area S1 about the rotation axis L1 (YES at Step S14), unless the power of the underwater detection apparatus 1 is turned OFF (NO at Step S15), the processings at and after Step S11 are repeated.

As described above, according to the first modification of the first embodiment, the motor 16 rotates at the first speed V1 when the underwater detection is performed, and the motor 16 rotates at the second speed V2 faster than the first speed V1 when the underwater detection is not performed. According to this configuration, the underwater detection apparatus 1 can secure a sufficient time for receiving the reception wave when the underwater detection is performed, and quickly return the wave transmitter 11 and the wave receiver 13 back into the detection area S1 when the detection is not performed. As a result, the updating cycle of the detection result image can be accelerated.

Moreover, according to the first modification of the first embodiment, the controller 31 rotates the motor 16 in the first direction K1 both when the underwater detection is performed and when the underwater detection is not performed. According to this configuration, since it is not necessary to change the rotating direction of the motor 16 between when the underwater detection is performed and when the detection is not performed, the load of the motor 16 can be lowered. Moreover, the rotating speed of the motor 16 can be changed more quickly between the first speed V1 and the second speed V2.

Moreover, according to the first modification of the first embodiment, at least a part of the reception fan-shaped space R1 is located in the transmission fan-shaped space T1. Moreover, the controller 31 rotates the motor 16 at the first speed V1 when the underwater detection is performed, and rotates the motor 16 at the second speed V2 faster than the first speed V1 when the underwater detection is not performed. According to this configuration, the updating cycle of the detection result image can be accelerated, while reducing the omission in the reception of the transmission wave in the reception fan-shaped space R1.

### [Second Modification of First Embodiment]

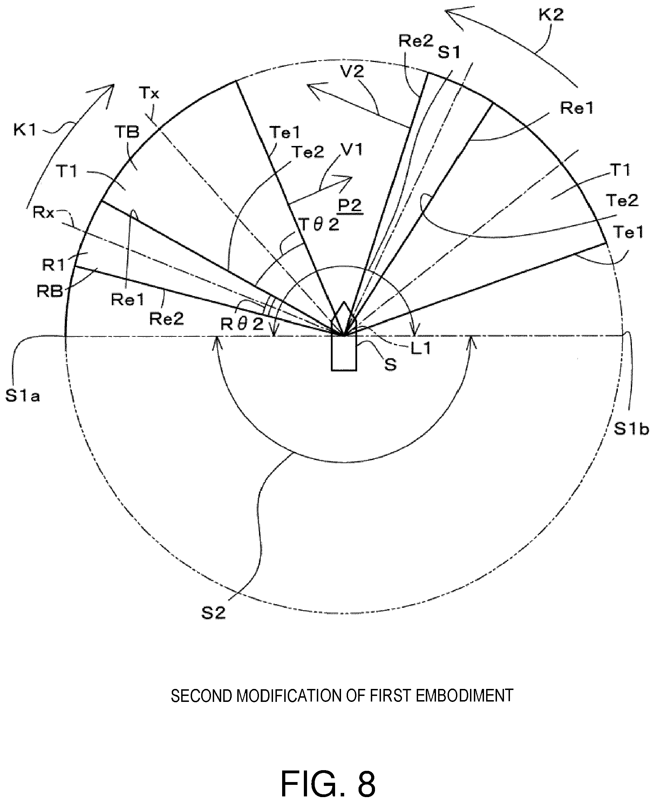

Fig. 8 is a plan view schematically illustrating a substantial part of a second modification of the first embodiment. Note that, below, a difference from the above embodiment and the modification will mainly be described, and like reference characters are denoted in the figures for similar configurations as the embodiment and the modification to omit the detailed description.

The difference of the second modification of the first embodiment from the first modification of the first embodiment is that the controller 31 rotates the motor 16 in the first direction K1 at the first speed V1 during the underwater detection when the underwater detection is performed in the detection area S1, and rotates the motor 16 in a second direction K2 opposite from the first direction K1 at the second speed V2 during the non-detection when the underwater detection is not performed.

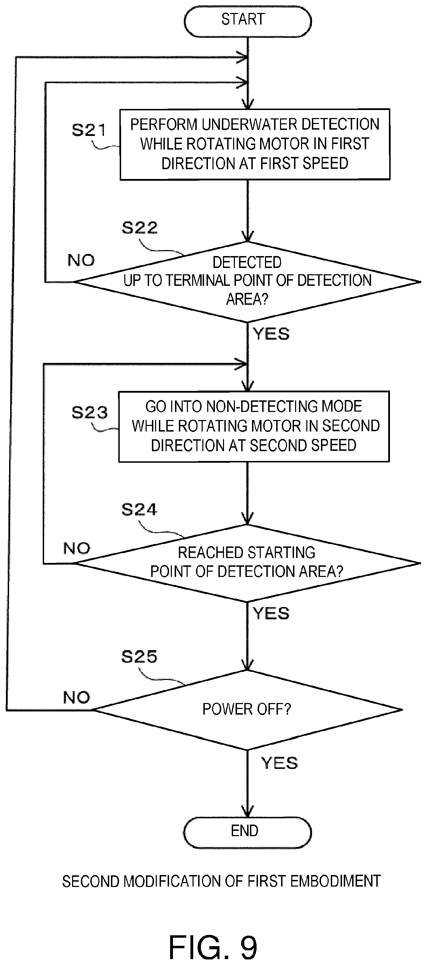

Fig. 9 is a flowchart illustrating one example of processing in the second modification of the first embodiment illustrated in Fig. 8. Below, a case where the detection is performed from the starting point S1a of the detection area S1 is described as one example. Referring to Figs. 1, 8, and 9, the controller 31 performs the detection control, while rotating the motor 16 in the first direction K1 at the first speed V1 (Step S21). This control is the same as the control at Step S11.

Then, the controller 31 refers to the rotational position of the motor 16 indicated by the rotational angle detecting part 18, and determines whether the detection is performed about the rotation axis L1 up to the terminal point S1b of the detection area S1 (Step S22). If the detection has not yet performed up to the terminal point S1b of the detection area S1 (NO at Step S22), the control at Step S21 is repeated. On the other hand, if the detection is performed up to the terminal point S1b of the detection area S1 (YES at Step S22), the controller 31 goes into the non-detecting mode while rotating the motor 16 in the second direction K2 at the second speed V2 faster than the first speed V1 (Step S23). The operations of the wave transmitter 11 and the wave receiver 13 are the same as the operations described at Step S13.

The controller 31 refers to the rotational position of the motor 16 indicated by the rotational angle detecting part 18, and repeats the control at Step S23 until the motor 16, the wave transmitter 11, and the wave receiver 13 reach the starting point S1a of the detection area S1 about the rotation axis L1 (NO at Step S24). Then, if the motor 16, the wave transmitter 11, and the wave receiver 13 reach the starting point S1a of the detection area S1 about the rotation axis L1 (YES at Step S24), the controller 31 repeats the processings at and after Step S21, unless the power of the underwater detection apparatus 1 is turned OFF (NO at Step S25).

As described above, according to the second modification of the first embodiment, in the non-detecting mode, the motor 16 rotates in the second direction K2 unlike the first modification of the first embodiment. With this configuration, the motor 16 rotates so as to oscillate within an angle range of 360°. Therefore, the slip ring for continuously rotating the motor 16 in the same direction becomes unnecessary.

### [Second Embodiment]

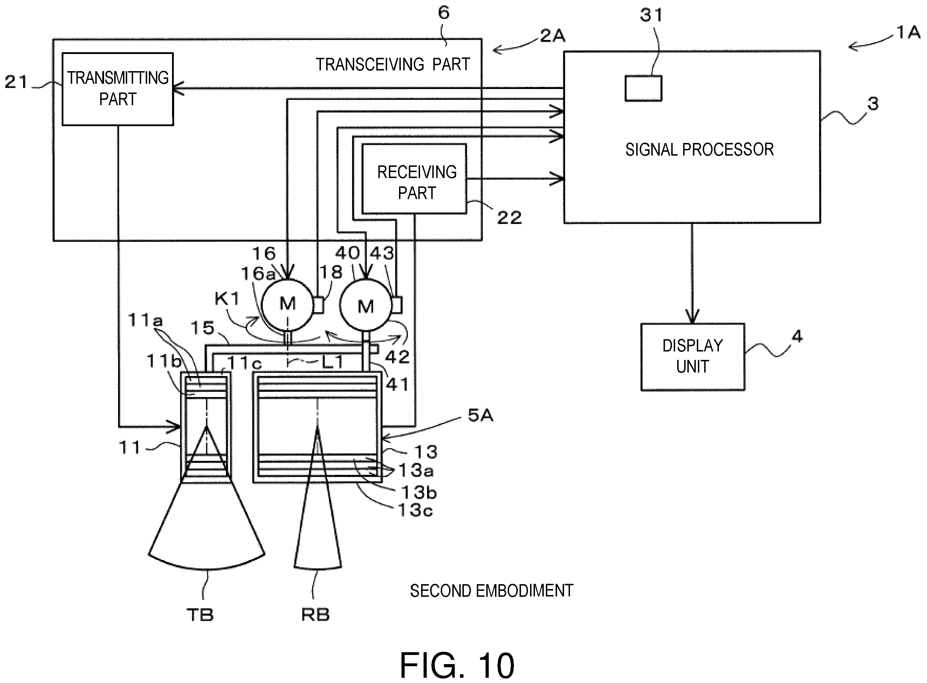

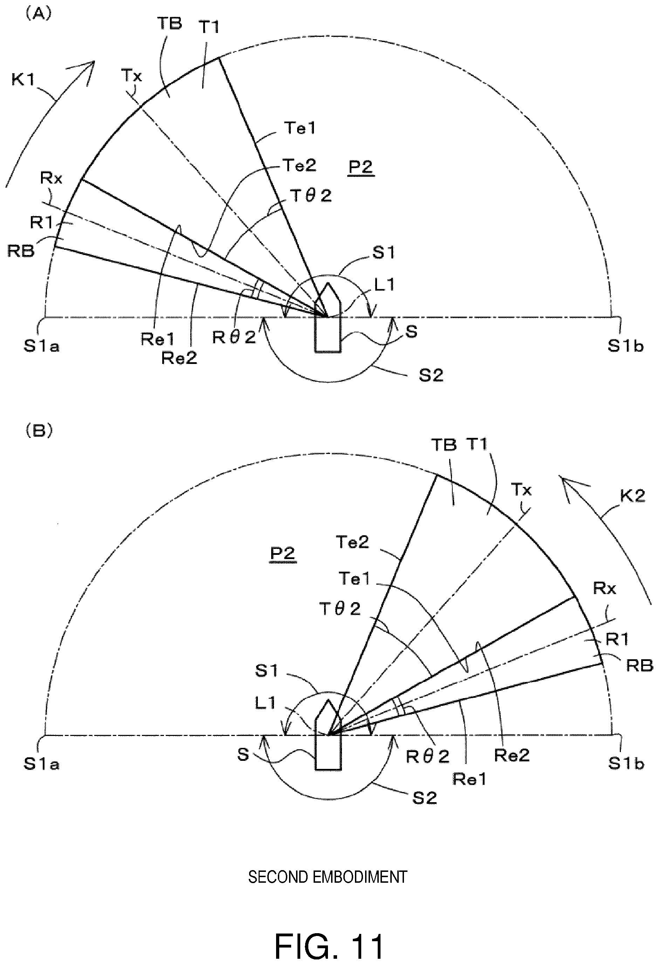

Fig. 10 is a block diagram illustrating a configuration of an underwater detection apparatus 1A according to a second embodiment of the present disclosure. Figs. 11(A) and 11(B) are plan views of the ship S to which the underwater detection apparatus 1A is mounted, seen in parallel with the second plane P2 perpendicular to the first plane P1, where the transmission fan-shaped space T1 and the reception fan-shaped space R1 are schematically illustrated. Fig. 11(A) illustrates a state where the wave transmitter 11 and the wave receiver 13 are rotated in the first direction K1, and Fig. 11(B) illustrates a state where the wave transmitter 11 and the wave receiver 13 are rotated in the second direction K2.

Referring to Figs. 10 to 11(B), a difference of the underwater detection apparatus 1A from the underwater detection apparatus 1 of the first embodiment is that the motor 16 rotates both in the first direction K1 and the second direction K2 opposite from the first direction K1 during the underwater detection. That is, the underwater detection apparatus 1A can perform the underwater detection, while rotating a wave transceiving unit 5A in the first direction K1, and can perform the underwater detection, while rotating the wave transceiving unit 5A in the second direction K2. Further, the second embodiment is configured so that the direction of the reception fan-shaped space R1 with respect to the transmission fan-shaped space T1 (in other words, the position of the reception fan-shaped space R1 with respect to the transmission fan-shaped space T1) is changed, when the rotating direction of the motor 16 is reversed.

The underwater detection apparatus 1A includes a direction change mechanism 40, in addition to the configuration of the underwater detection apparatus 1. In detail, the underwater detection apparatus 1A includes a transceiving device 2A, the signal processor 3, and the display unit 4.

The transceiving device 2A includes the wave transceiving unit 5A and the transceiving part 6.

The wave transceiving unit 5A includes the wave transmitter 11, the wave receiver 13, the bracket 15, the motor 16 as the rotary driving part, the rotational angle detecting part 18, and the direction change mechanism 40.

The direction change mechanism 40 changes the direction of the reception fan-shaped space R1 with respect to the transmission fan-shaped space T1 in the second plane P2. The direction change mechanism 40 changes the direction of the reception fan-shaped space R1 in conjunction with the change in the rotating direction of the motor 16 about the rotation axis L1 to shift the position of the reception fan-shaped space R1 in the second plane P2 forward or front in the rotating direction before the change in the rotating direction.

The direction change mechanism 40 includes a pivot 41 which supports the wave receiver 13 so that the direction of the wave receiver 13 with respect to the wave transmitter 11 is changeable, and a direction change motor 42 which changes the direction of the wave receiver 13 around the pivot 41.

The pivot 41 is a shaft part extending in the longitudinal direction of the wave receiver 13, i.e., a direction in which the plurality of wave reception elements 13a are lined up, is supported by the bracket 15, and rotatably supports the wave receiver 13 in the oscillating direction around the pivot 41.

The direction change motor 42 is a motor of which the rotational position is controllable, such as a stepping motor, a servo motor, etc., and is connected to the controller 31 of the signal processor 3. The direction change motor 42 includes a casing supported by the bracket 15, and an output shaft which extends from the casing and is coupled to the pivot 41 directly or through a reduction mechanism (not illustrated) so that the power is transferable to the pivot 41. With this configuration, the direction change motor 42 is changeable of the direction of the wave receiver 13 around the pivot 41.

A rotational angle detecting part 43 is attached to the direction change motor 42, and the rotational angle detecting part 43 is connected to the controller 31. For example, an encoder is used as the rotational angle detecting part 43. However, without being limited to this configuration, the signal for controlling the rotation of the direction change motor 42 may be analyzed and the signal may be converted into angular information. In detail, if the stepping motor is used as the direction change motor 42, the number of instruction pulses inputted into the stepping motor may be counted, and the count may be converted into the angular information. In the underwater detection apparatus 1A, the direction of the wave receiver 13 with respect to the wave transmitter 11 in the second plane P2 is calculated based on the rotational angle of the direction change motor 42 detected by the rotational angle detecting part 43. The direction change motor 42 is controlled by the controller 31 of the signal processor 3.

The controller 31 outputs an instruction signal to the direction change motor 42 to control the operation of the direction change motor 42. The controller 31 sets a target angle value of the output shaft of the direction change motor 42. Then, the controller 31 detects the rotational position of the output shaft of the direction change motor 42 by the rotational angle detecting part 43, and controls the direction change motor 42 so that a deviation of the detected value from the target output value becomes zero.

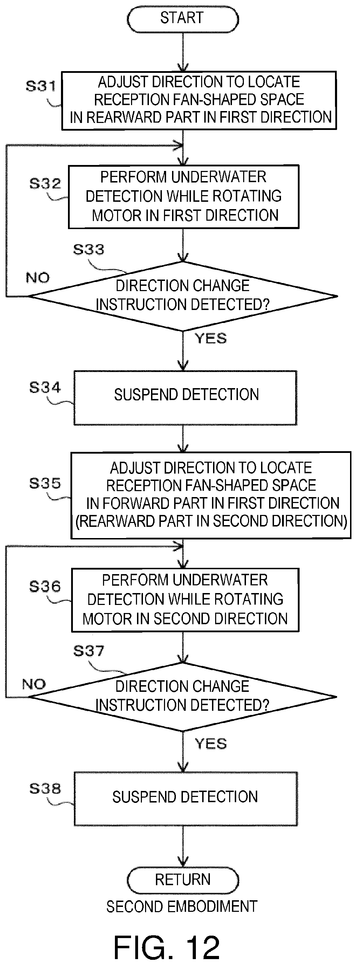

Fig. 12 is a flowchart illustrating one example of processing in the second embodiment. Referring to Figs. 10 to 12, first, a case where the underwater detection is performed by the wave transmitter 11 and the wave receiver 13 rotating in the first direction K1 is considered. In this case, the direction of the wave receiver 13 with respect to the wave transmitter 11 is set by the controller 31 controlling the direction change motor 42 so that the reception fan-shaped space R1 is located in a rearward or backward side of the transmission fan-shaped space T1 in the first direction K1 (Step S31). At this time, the transmission fan-shaped space T1 and the reception fan-shaped space R1 are as illustrated in Fig. 11(A), and are the same as in the first embodiment. Note that, at this time, the relation between the transmission fan-shaped space T1 and the reception fan-shaped space R1 may be the relation illustrated in Fig. 4(B), or may be the relation illustrated in Fig. 4(C).

Next, the controller 31 controls the transmitting part 21 and the receiving part 22 while rotating the motor 16 in the first direction K1 to emit the transmission pulse wave and receive the reception wave while rotating the wave transmitter 11 and the wave receiver 13 in the first direction K1. That is, the underwater detection by the underwater detection apparatus 1A is performed (Step S32).

Until the controller 31 receives a direction change instruction, for example, by a given time being lapsed or receiving an instruction from the operator of the underwater detection apparatus 1A (NO at Step S33), the controller 31 performs the underwater detection, while rotating the motor 16 in the first direction K1 (Step S32).

On the other hand, if the controller 31 detects the direction change instruction (YES at Step S33), it suspends the underwater detection (Step S34). In detail, the controller 31 suspends the image data generation by the signal processor 3, while suspending the rotation of the motor 16.

Next, the controller 31 sets the direction of the wave receiver 13 with respect to the wave transmitter 11 by controlling the direction change motor 42 so that the reception fan-shaped space R1 is located in a forward or front side of the transmission fan-shaped space T1 in the first direction K1, i.e., the reception fan-shaped space R1 is located in a rearward part of the transmission fan-shaped space T1 in the second direction K2 (Step S35). At this time, the transmission fan-shaped space T1 and the reception fan-shaped space R1 are as illustrated in Fig. 11(B). In detail, a relative position of the transmission fan-shaped space T1 and the reception fan-shaped space R1 are set so that the first transmission edge Te1 of the transmission fan-shaped space T1 and the second reception edge Re2 of the reception fan-shaped space R1 are overlapped with each other. Thus, in conjunction with the change in the rotating direction of the motor 16, the direction change mechanism 40 changes the direction of the reception fan-shaped space R1 to shift the position of the reception fan-shaped space R1 in the second plane P2 to the leading edge Te1 of the transmission fan-shaped space T1 in the rotating direction before the rotating direction is changed.

Also in this case, as illustrated in Fig. 13(A), similar to the description referring to Fig. 4(B) of the first embodiment, the direction of the wave receiver 13 is set so that the first transmission edge Te1 which is a trailing edge in the second direction K2 is overlapped with the reception fan-shaped space R1 at a position other than the second reception edge Re2. In this case, the first transmission edge Te1 and the center axis Rx are overlapped with each other in the second plane P2. Moreover, in the second plane P2, half the reception fan-shaped space R1 is overlapped with the transmission fan-shaped space T1. The first reception edge Re1 is not overlapped with the transmission fan-shaped space T1. Moreover, the center axis Tx of the transmission fan-shaped space T1 is not overlapped with the reception fan-shaped space R1.

Furthermore, a relation similar to the one illustrated in Fig. 4(C) may be established. For example, referring to Fig. 13(B) which illustrates a further modification of the relation between the transmission fan-shaped space T1 and the reception fan-shaped space R1 in the second plane P2 when rotating in the second direction K2, a space where the transmission fan-shaped space T1 and the reception fan-shaped space R1 are overlapped with each other is larger than that in the modification illustrated in Fig. 13(A). In the modification illustrated in Fig. 13(B), in the second plane P2, the first transmission edge Te1 and the first reception edge Re1, which are the trailing edges of the transmission fan-shaped space T1 and the reception fan-shaped space R1 in the second direction K2, respectively, are overlapped with each other. The center axis Tx of the transmission fan-shaped space T1 is not overlapped with the reception fan-shaped space R1. On the other hand, the center axis Rx of the reception fan-shaped space R1 is overlapped with the transmission fan-shaped space T1. According to such a configuration, the entire range of the reception fan-shaped space R1 is overlapped with the transmission fan-shaped space T1.

Next, again referring to Figs. 10 to 12, the controller 31 controls the transmitting part 21, while rotating the motor 16 in the second direction K2 to emit the transmission pulse wave and receive the reception wave, while rotating the wave transmitter 11 and the wave receiver 13 in the second direction K2. That is, the underwater detection by the underwater detection apparatus 1A is performed (Step S36).

Similar to the configuration described above, until the controller 31 detects the direction change instruction (NO at Step S37), it performs the underwater detection, while rotating the wave transmitter 11 and the wave receiver 13 in the second direction K2 (Step S36).

On the other hand, if the controller 31 detects the direction change instruction (YES at Step S37), it suspends the underwater detection (Step S38). In detail, the controller 31 suspends the image data generation by the signal processor 3 while suspending the rotation of the motor 16. Next, the processings at and after Step S31 are repeated.

As described above, with the underwater detection apparatus 1A according to the second embodiment, the direction change mechanism 40 is provided. Thus, both when the wave transmitter 11 and the wave receiver 13 are rotated in the first direction K1 and when they are rotated in the second direction K2, the relative spatial relationship between the transmission fan-shaped space T1 and the reception fan-shaped space R1 can be maintained similarly. Moreover, the rotating direction of the wave transmitter 11 and the wave receiver 13 is not only one of the first direction K1 and the second direction K2. Therefore, it is not necessary to use the slip ring required when the rotating direction of the motor 16 is fixed.

Note that, although the second embodiment is described as the direction of the wave receiver 13 being changed by the direction change motor 42, this configuration may be altered. For example, the wave transmitter 11 may be rotatable around a pivot similar to the pivot 41, and the direction of the wave transmitter 11 may be changed by the direction change motor 42. At least one of the wave transmitter 11 and the wave receiver 13 may be changed in the direction by the direction change motor 42.

### [First Modification of Second Embodiment]

In the second embodiment, the direction change motor 42 may be omitted, a friction generating member, such as a collar made of resin, may be provided between the pivot 41 and the casing 13c of the wave receiver 13, and a stop which regulates an amount of rotation of the wave receiver 13 around the pivot 41 within a fixed range may be provided. In this case, when the motor 16 changes the rotating direction to the opposite direction, the output shaft 16a of the motor 16 is driven so that inertia above a given value occurs in the wave receiver 13 around the pivot 41. Therefore, similar to the second embodiment, the direction of the wave receiver 13 with respect to the wave transmitter 11 can be changed by the inertia.

Although in the first modification of this second embodiment the direction of the wave receiver 13 is changed by the inertia, the configuration may be altered. For example, the wave transmitter 11 may be rotatable around a pivot similar to the pivot 41, and the direction of the wave transmitter 11 may be changed by the inertia. At least one of the wave transmitter 11 and the wave receiver 13 may be changed in the direction by the inertia.

### [Second Modification of Second Embodiment]

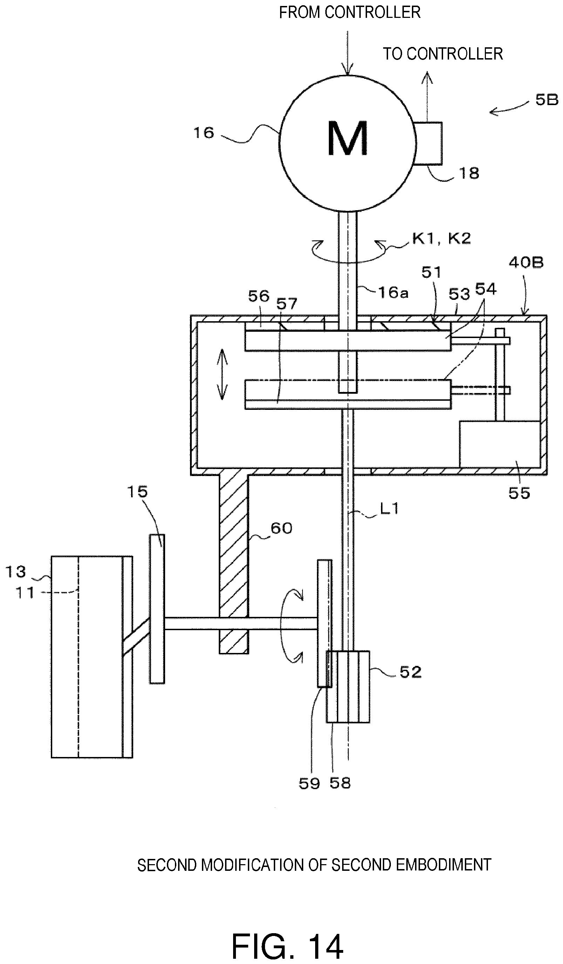

Fig. 14 is a side view schematically illustrating a substantial part of a second modification of the second embodiment, and a part thereof is illustrated in a cross-section. In the second modification of the second embodiment, the direction of the transmission fan-shaped space T1 with respect to the reception fan-shaped space R1 is changed by rotating the entire of the wave transmitter 11 and the wave receiver 13.

In detail, a wave transceiving unit 5B is provided, instead of the wave transceiving unit 5 illustrated in the first embodiment. The wave transceiving unit 5B includes the wave transmitter 11, the wave receiver 13, the bracket 15 which supports the wave transmitter 11 and the wave receiver 13, the motor 16 as the rotary driving part, the rotational angle detecting part 18, and a direction change mechanism 40B.

The direction change mechanism 40B includes the motor 16, a power distribution mechanism 51, and a rotating mechanism 52.

In the second embodiment, the motor 16 constitutes a part of the direction change mechanism 40B. The output shaft 16a of the motor 16 is coupled to the power distribution mechanism 51.

The power distribution mechanism 51 is provided in order to distribute the output of the motor 16 selectively to power for the underwater detection and power for reversing the direction of the wave transmitter 11 and the wave receiver 13. The power distribution mechanism 51 includes a casing 53, a driving member 54 accommodated in the casing 53, an actuator 55 which is supported by the casing 53 and displaces the driving member 54, a first follower member 56 fixed to the inside of the casing 53, and a second follower member 57 accommodated in the casing 53.

The casing 53 is a member which is formed in a hollow box shape and is supported rotatably about the rotation axis L1 by a support member (not illustrated). The output shaft 16a of the motor 16 penetrates the casing 53, and is rotatable relatively to the casing 53.

For example, the driving member 54 is a clutch disk where friction members are formed on the front surface and the back surface thereof. For example, an inner spline is formed at the center of the driving member 54, and the inner spline fits onto an outer spline formed on the output shaft 16a of the motor 16. Therefore, the driving member 54 is integrally rotatable with the output shaft 16a and is relatively displaceable in the axial direction of the output shaft 16a.

The actuator 55 displaces the driving member 54 in the axial direction of the output shaft 16a to switch between a state where the driving member 54 and the first follower member 56 are coupled so as to integrally be rotatable, and a state where the driving member 54 and the second follower member 57 are coupled so as to integrally be rotatable. The actuator 55 has a configuration in which a ball-screw mechanism is attached to an electric motor. The actuator 55 is controllable of its driving state by the controller 31 of the signal processor 3.

The first follower member 56 is, for example, a metal member of a disk shape which is fixed to the casing 53 and is integrally rotatable with the casing 53. The first follower member 56 and the driving member 54 face each other in the axial direction of the output shaft 16a. The second follower member 57 is, for example, a metal member of a disk shape. The second follower member 57 and the driving member 54 face each other in the axial direction of the output shaft 16a. The second follower member 57 is coupled to a drive gear part 58 of the rotating mechanism 52.

The rotating mechanism 52 is provided in order to rotate the wave transmitter 11 and the wave receiver 13 horizontally or with some angle from the horizontal plane. The rotating mechanism 52 is an intersecting axis gear mechanism, and includes the drive gear part 58 fixed to the first follower member 56, and a follower gear part 59 fixed to the bracket 15.

The drive gear part 58 is formed in a shaft shape, and is rotatably supported by the casing 53 through a bearing (not illustrated) about the rotation axis L1. The second driving member 54 is coupled to an upper end of the drive gear part 58 so as to be integrally rotatable. A gear is provided to a lower end of the drive gear part 58.

The follower gear part 59 has a gear which meshes with the gear of the drive gear part 58. The axis of the drive gear part 58 intersects with the axis of the follower gear part 59, and the axis of the follower gear part 59 extends horizontally or at an inclination angle near the horizontal direction.

The bracket 15 is rotatably supported about the axis of the follower gear part 59 through a stay 60 fixed to the casing 53 and a bearing (not illustrated).

With the above configuration, when the wave transmitter 11 and the wave receiver 13 rotate about the rotation axis L1 for the underwater detection, the actuator 55 couples the driving member 54 to the first follower member 56 as illustrated by solid lines. Therefore, the driving member 54, the first follower member 56, the casing 53, the stay 60, the bracket 15, the wave transmitter 11, and the wave receiver 13 rotates about the rotation axis L1 integrally with the output shaft 16a of the motor 16.

On the other hand, when the rotating direction about the rotation axis L1 is reversed, the actuator 55 couples the driving member 54 to the second follower member 57 as illustrated by two-dot chain lines which are imaginary lines. Therefore, the casing 53 does not rotate about the rotation axis L1, the drive gear part 58 rotates with the rotation of the output shaft 16a of the motor 16, and the follower gear part 59 rotates. As a result, the bracket 15, the wave transmitter 11, and the wave receiver 13 rotates about the rotation axis of the follower gear part 59. Therefore, the spatial relationship of the transmission fan-shaped space T1 and the reception fan-shaped space R1 can be achieved, similarly to the second embodiment.

Note that, the direction change mechanism 40B may have any configuration with the same relative spatial relationship of the transmission fan-shaped space T1 and the reception fan-shaped space R1 when the wave transmitter 11 and the wave receiver 13 rotate in the first direction K1 and when they rotate in the second direction K2, without being limited to the above configuration.

### [Third Embodiment]

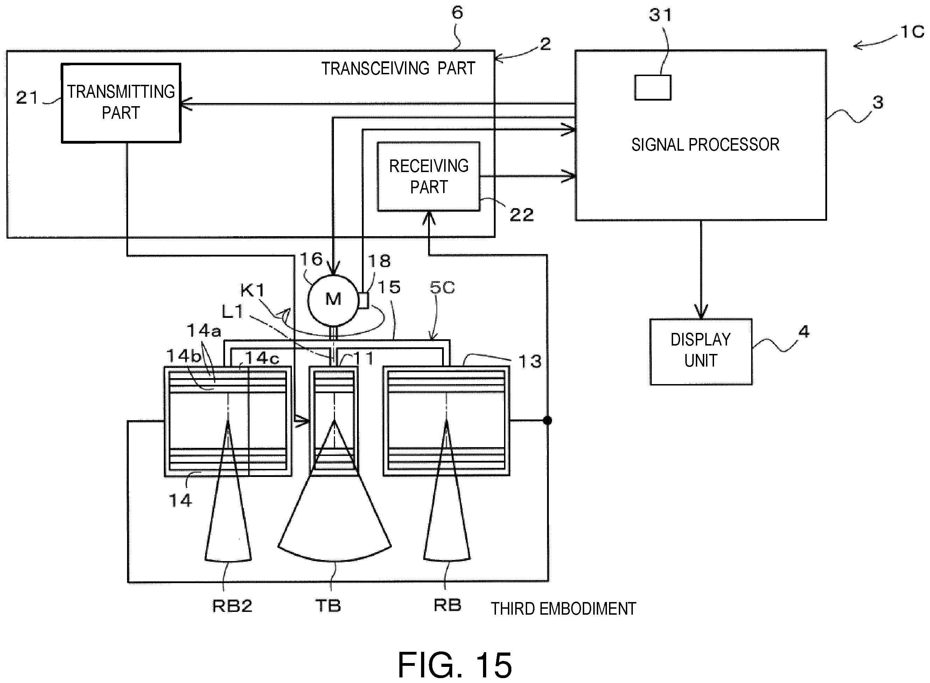

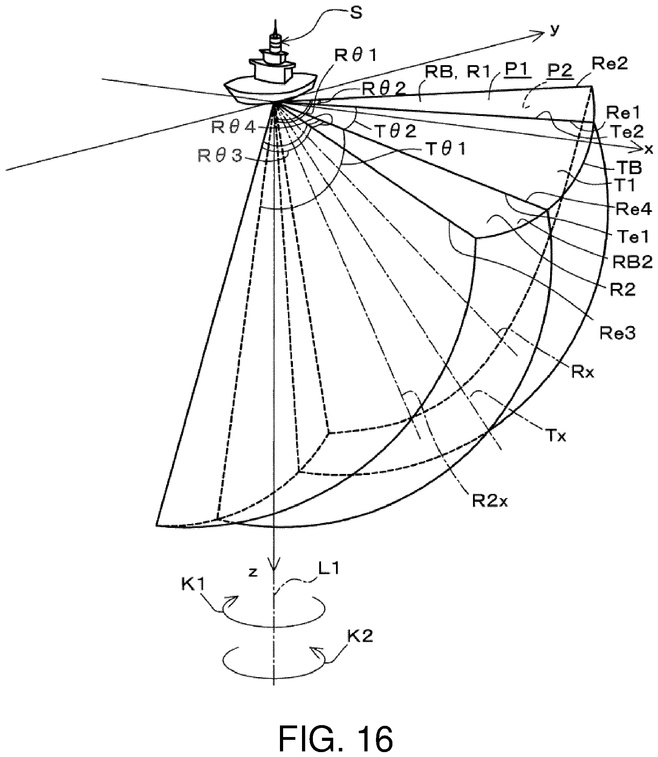

Fig. 15 is a block diagram illustrating a configuration of an underwater detection apparatus 1C according to a third embodiment of the present disclosure. Fig. 16 is a view schematically illustrating the transmission beam TB formed by the wave transmitter 11, and the reception beams RB received by the wave receiver 13 and a wave receiver 14, respectively. Fig. 17(A) is a plan view of a ship S to which the underwater detection apparatus 1C is mounted, seen in parallel with the second plane P2, and where the transmission fan-shaped space T1 formed by the wave transmitter 11, and reception fan-shaped spaces R1 and R2 received by the wave receivers 13 and 14, respectively, are schematically illustrated.

Referring to Figs. 15 to 17(A), a difference of the underwater detection apparatus 1C from the underwater detection apparatus 1 of the first embodiment is that the two wave receivers 13 and 14 are provided to the underwater detection apparatus 1C. In the underwater detection apparatus 1C, when the wave transmitter 11 and the wave receivers 13 and 14 rotate in the first direction K1 about the rotation axis L1, the wave receiver 13 receives the reception wave of the reception fan-shaped space R1, and when the wave transmitter 11 and the wave receivers 13 and 14 rotate in the second direction K2 about the rotation axis L1, the second wave receiver 14 (also referred to as a "second reception transducer") receives the reception wave of the reception fan-shaped space R2.

A wave transceiving unit 5C includes the wave transmitter 11, the wave receiver 13, the second wave receiver 14, the bracket 15 which supports the wave transmitter 11 and the wave receivers 13 and 14, the motor 16 as the rotary driving part, and the rotational angle detecting part 18.

The second wave receiver 14 is disposed so that wave transmitter 11 is disposed between the wave receiver 13 and the second wave receiver 14. The second wave receiver 14 has a configuration in which one or more wave reception elements 14a as the ultrasonic transducers are attached to a casing 14c. Each wave reception element 14a has a wave receiving surface 14b. The second wave receiver 14 is attached to the bracket 15. The wave transmitter 11 and the wave receivers 13 and 14 are integrally rotated by the motor 16 about the rotation axis L1 of the motor 16.

The second wave receiver 14 receives a signal of the second reception fan-shaped space R2 which is a range or space where the three-dimensional reception beam RB2 is formed. The second reception fan-shaped space R2 is a substantially fan-shaped beam. That is, the second wave receiver 14 receives the reception wave which is the reflection wave of the transmission wave in the second reception fan-shaped space R2. The second reception fan-shaped space R2 differs in the position about the rotation axis L1 from the reception fan-shaped space R1, however, it has the same fan shape as the reception fan-shaped space R1.

The second wave receiver 14 performs the beam forming with the transceiving part 6 and the signal processor 3 which will be described in detail below, similar to the wave receiver 13, to detect inside the reception fan-shaped space R2 as the fan-shaped space where the linear array of the second wave receiver 14 has the gain, by using the thin reception beam which scans electronically.

The second reception fan-shaped space R2 has a third reception width Rθ3 within the first plane P1, and it has a fourth reception width Rθ4 in the second plane P2, where the third reception width Rθ3 is wider than the fourth reception width Rθ4. Further, the fourth reception width Rθ4 of the second reception fan-shaped space R2 is narrower than the second transmission width Tθ2 of the transmission fan-shaped space T1. The second reception fan-shaped space R2 is formed in the fan shape both in the first plane P1 and the second plane P2. The third reception width Rθ3 is an angle width centering on the wave transmitter 11. The fourth reception width Rθ4 is an angle width about the rotation axis L1 of the motor 16.

Note that, as described above, when the reception power sensitivity at edges Re3 and Re4 of the second reception fan-shaped space R2 is the magnitude of -3dB from the reception power sensitivity at a center axis R2x, the fourth reception width Rθ4 < the third reception width Rθ3. On the other hand, for example, when the reception power sensitivity at the edges Re3 and Re4 of the second reception fan-shaped space R2 is the magnitude of -10dB, which is smaller than -3dB, from the reception power sensitivity at the center axis R2x, it is possible to have the fourth reception width Rθ4 > the third reception width Rθ3.

The third reception width Rθ3 may be within a range of 6° to 90°. The fourth reception width Rθ4 is, for example, set to 6°. In this embodiment, the fourth reception width Rθ4 and the second reception width Rθ2 is set as the same value.

An angle formed by the direction which is perpendicular to the wave receiving surface 14b of the linear array and where the second reception fan-shaped space R2 is formed, and the horizontal plane, may be any angle, as long as it is within a range from 0° which is an angle in case where the linear array is disposed in the vertical direction to 90° which is an angle in case where the linear array is disposed in the horizontal direction.

About the rotation axis L1 in the second plane P2, the center axis R2x of the second reception fan-shaped space R2 is a line on which the reception power sensitivity is the highest in the second reception fan-shaped space R2. On the other hand, about the rotation axis L1 in the second plane P2, the third reception edge Re3 and the fourth reception edge Re4 as a pair of edges of the second reception fan-shaped space R2 are lines at positions where the reception power sensitivity is the lowest in the second reception fan-shaped space R2. In this embodiment, the reception power sensitivity at the reception edges Re3 and Re4 is an intensity of -3dB from the reception power sensitivity at the center axis R2x, and is a substantially half of the intensity. The second reception fan-shaped space R2 is a range or space which includes the center axis R2x at which the reception power sensitivity of the second reception fan-shaped space R2 is the maximum, and where the reception power sensitivity is halved from the maximum to -3dB. In this embodiment, the second wave receiver 14 is provided to the bottom of the ship so that the center axis R2x of the second reception fan-shaped space R2 becomes oblique to the vertical direction. Note that the second reception fan-shaped space R2 may be a range where the reception power sensitivity is reduced by -n3dB (n3 is set according to the detection target object etc. of the underwater detection apparatus 1C) from the maximum value. The third reception edge Re3 is a leading edge or front edge in the first direction K1, and the fourth reception edge Re4 is a trailing edge or back edge in the first direction K1.

In this embodiment, in the second plane P2, one of the pair of transmission edges Te1 and Te2 of the transmission fan-shaped space T1 is located in the reception fan-shaped space R1, and the other one of the pair of transmission edges Te1 and Te2 are located in the second reception fan-shaped space R2. In other words, in the second plane P2, among the pair of transmission edges Te1 and Te2 of the transmission fan-shaped space T1, the other edge Te1, which is different from the one edge Te2 located in the reception fan-shaped space R1, is located in the second reception fan-shaped space R2. In detail, the wave transmitter 11 and the wave receiver 13 are configured so that the second transmission edge Te2, which is the trailing edge in the first direction K1, is overlapped with the first reception edge Re1, which is the leading edge in the first direction K1. Since the relative spatial relationship between the transmission fan-shaped space T1 and the reception fan-shaped space R1 is the same as the first embodiment, the description is omitted.

Moreover, as for the second reception fan-shaped space R2, the wave transmitter 11 and the second wave receiver 14 are configured so that the first transmission edge Te1, which is the trailing edge in the second direction K2, is overlapped with the fourth reception edge Re4, which is the leading edge in the second direction K2. That is, in the second plane P2, the fourth reception edge Re4 is located on the first transmission edge Te1 which is on the trailing side of the transmission fan-shaped space T1 in the second direction K2. In this configuration, although the transmission fan-shaped space T1 and the second reception fan-shaped space R2 are overlapped with each other at the first transmission edge Te1 and the fourth reception edge Re4, they are not overlapped with each other at other positions. Moreover, the center axis Tx of the transmission fan-shaped space T1 is not overlapped with the second reception fan-shaped space R2, and the center axis R2x of the second reception fan-shaped space R2 is not overlapped with the transmission fan-shaped space T1.

As described above, in the second plane P2, the second reception fan-shaped space R2 is offset to one side of the transmission fan-shaped space T1 in the second direction K2 (in detail, to the rearward or backward side in the second direction K2).

Note that, relations other than the relation between the transmission fan-shaped space T1 and the second reception fan-shaped space R2 which is illustrated in Fig. 17(A) may be established. One example of such a relation is described with reference to Fig. 17(B).

Fig. 17(B) is a view illustrating a modification of the relation between the transmission fan-shaped space T1 and the two reception fan-shaped spaces R1 and R2 in the second plane P2. In this modification, in the second plane P2, the wave transmitter 11 and the second wave receiver 14 are configured so that the first transmission edge Te1, which is the trailing edge in the second direction K2 is overlapped with the second reception fan-shaped space R2 at positions other than the fourth edge Re4. In this modification, the first transmission edge Te1 and the center axis R2x are overlapped with each other in the second plane P2. Moreover, in the second plane P2, a half of the second reception fan-shaped space R2 are overlapped with the transmission fan-shaped space T1. The third reception edge Re3 is not overlapped with the transmission fan-shaped space T1. Moreover, the center axis Tx of the transmission fan-shaped space T1 is not overlapped with the second reception fan-shaped space R2.

Note that, in the modification illustrated in Fig. 17(B), the relative spatial relationship between the transmission fan-shaped space T1 and the reception fan-shaped space R1 is the same as the modification illustrated in Fig. 4(B) of the first embodiment.

Further, a relation different from the one illustrated in Fig. 17(B) may be established. For example, referring to Fig. 17(C) which illustrates a further modification of the relation between the transmission fan-shaped space T1 and the two reception fan-shaped spaces R1 and R2 in the second plane P2, a space where the transmission fan-shaped space T1 and the reception fan-shaped spaces R1 and R2 are overlapped with each other is larger than that in the modification illustrated in Fig. 17(B). In the modification illustrated in Fig. 17(C), in the second plane P2, the first transmission edge Te1 and the third reception edge Re3, which are the trailing edges of the transmission fan-shaped space T1 and the second reception fan-shaped space R2 in the second direction K2, respectively, are overlapped with each other. The center axis Tx of the transmission fan-shaped space T1 is not overlapped with the second reception fan-shaped space R2. On the other hand, the center axis R2x of the second reception fan-shaped space R2 is overlapped with the transmission fan-shaped space T1.

Note that, in the modification illustrated in Fig. 17(C), the relative spatial relationship between the transmission fan-shaped space T1 and the reception fan-shaped space R1 is the same as in the modification illustrated in Fig. 4(C) of the first embodiment.

Referring again to Figs. 15 to 17(A), the motor 16 rotates the wave transmitter 11, the wave receiver 13, and the second wave receiver 14 integrally in the first direction K1 or the second direction K2 about the rotation axis L1. That is, the motor 16 rotates the transmission fan-shaped space T1, the reception fan-shaped space R1, and the second reception fan-shaped space R2.

The receiving part 22 of the transceiving part 6 amplifies the echo signal as the electric signal outputted selectively from one of the wave receivers 13 and 14, and carries out the A/D conversion of the amplified echo signal. Then, the receiving part 22 outputs the echo signal converted into the digital signal to the signal processor 3. In detail, the receiving part 22 has a plurality of reception circuitries. Each reception circuitry outputs to the signal processor 3 each echo signal (reception signal) acquired by converting the reception wave received by the corresponding wave reception element 13a or 14a into the electric signal.

The controller 31 of the signal processor 3 selectively receives from the transceiving part 6 the echo signal from the wave receiver 13 or the echo signal from the second wave receiver 14. Then, the signal processor 3 generates the image data as the detection information based on the echo signal from the wave receiver 13 (i.e., the reception signal) or the echo signal from the second wave receiver 14 (i.e., a second reception signal).

When the signal processor 3 rotates the wave transmitter 11 and the wave receivers 13 and 14 in the first direction K1 in the detection area S1, it transmits the transmission pulse wave from the wave transmitter 11 to the transmission fan-shaped space T1, and performs the beam forming, for the reception wave received by the wave receiver 13, by using the reception result in the reception fan-shaped space R1 to generate the image data indicative of the detection result. At this time, the signal of the second reception fan-shaped space R2 is not used for the image data generation.

On the other hand, when the signal processor 3 rotates the wave transmitter 11 and the wave receivers 13 and 14 in the second direction K2 in the detection area S1, it transmits the transmission pulse wave from the wave transmitter 11 to the transmission fan-shaped space T1, and performs the beam forming, for the reception wave received by the second wave receiver 14, by using the reception result in the second reception fan-shaped space R2 to generate the image data indicative of the detection result. At this time, the signal of the reception fan-shaped space R1 is not used for the image data generation.

According to the configuration of the wave transceiving unit 5C, the underwater detection apparatus 1C can detect the target object in the three-dimensional space covering the large area centering on the ship S, and estimate the three-dimensional position of the target object in this space.

As described above, according to the underwater detection apparatus 1C of the third embodiment, the underwater detection can be performed even when the wave transmitter 11 and the wave receivers 13 and 14 rotate either in the first direction K1 or the second direction K2. As a result, the motor 16 can also rotate so as to oscillate within an angle range of 360°. Therefore, the slip ring becomes unnecessary. Further, the operation for physically reversing the wave transmitter 11 and the wave receivers 13 and 14 is unnecessary.

### [Modification of Third Embodiment]

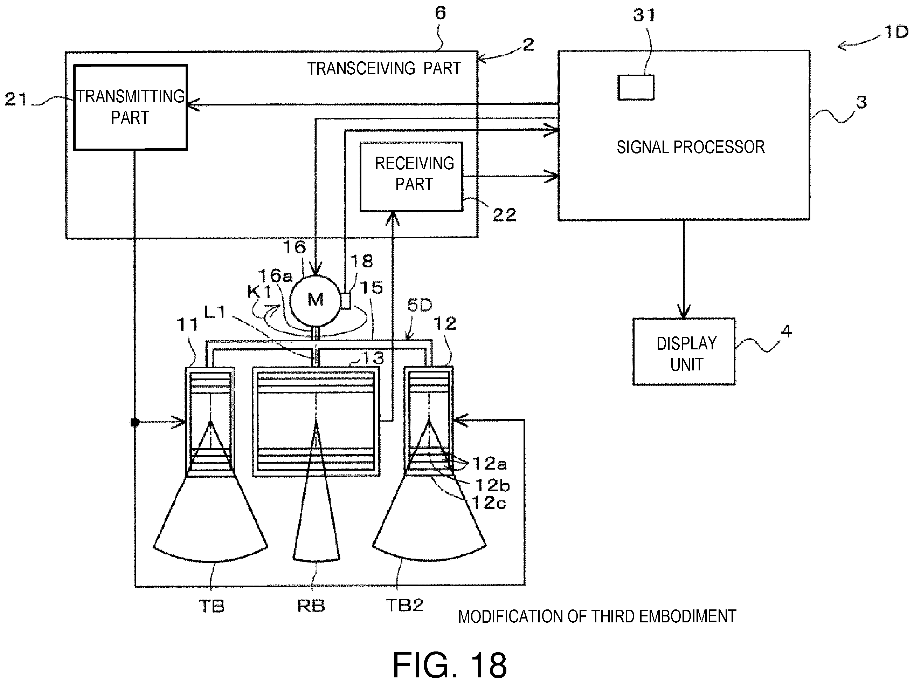

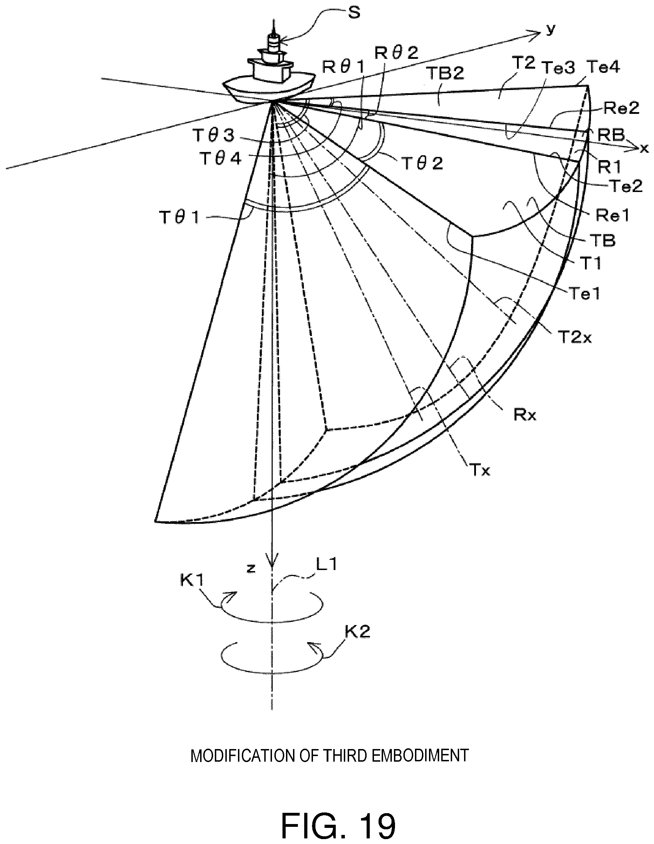

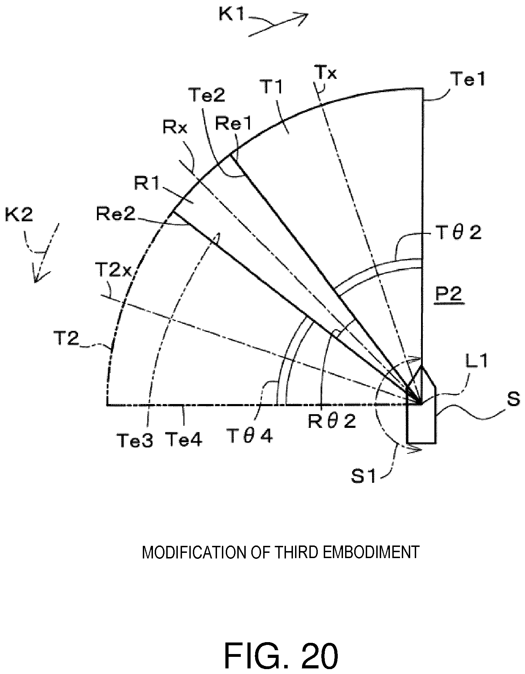

Fig. 18 is a block diagram illustrating a configuration of an underwater detection apparatus 1D according to a modification of the third embodiment of the present disclosure. Fig. 19 is a view schematically illustrating transmission beams TB formed by the wave transmitter 11 and a second wave transmitter 12 (may also be referred to as a "second transmission transducer"), and the reception beam RB received by the wave receiver 13. Fig. 20 is a plan view of the ship S to which the underwater detection apparatus 1D is mounted, seen in parallel with the second plane P2, where transmission fan-shaped spaces T1 and T2 formed by the wave transmitter 11 and the second wave transmitter 12, respectively, and the reception fan-shaped space R1 received by the wave receiver 13 are schematically illustrated.

Referring to Figs. 18 to 20, a difference of the underwater detection apparatus 1D from the underwater detection apparatus 1C of the third embodiment is that the underwater detection apparatus 1D is provided with the two wave transmitters 11 and 12, and is also provided with the single wave receiver 13. In the underwater detection apparatus 1D, when the wave transmitters 11 and 12 and the wave receiver 13 rotate about the rotation axis L1 in the first direction K1, the wave transmitter 11 transmits the transmission pulse wave to the transmission fan-shaped space T1. Moreover, when the wave transmitters 11 and 12 and the wave receiver 13 rotate in the second direction K2 about the rotation axis L1, the second wave transmitter 12 transmits the transmission pulse wave to the second transmission fan-shaped space T2.

A wave transceiving unit 5D includes the wave transmitter 11, the second wave transmitter 12, the wave receiver 13, the bracket 15 which supports the wave transmitters 11 and 12 and the wave receiver 13, the motor 16 as the rotary driving part, and the rotational angle detecting part 18.

The second wave transmitter 12 is disposed so that the wave receiver 13 is disposed between the wave transmitter 11 and the second wave transmitter 12. The second wave transmitter 12 has the configuration in which one or more wave transmission elements 12a as the ultrasonic transducers are attached to a casing 12c. Each wave transmission element 12a has a second wave transmitting surface 12b. The second wave transmitter 12 is attached to the bracket 15, and the wave transmitters 11 and 12 and the wave receiver 13 are rotated integrally by the motor 16 about the rotation axis L1 of the motor 16.

The second wave transmitter 12 forms the three-dimensional transmission beam TB2 in the second transmission fan-shaped space T2. The second transmission fan-shaped space T2 is the substantially fan-shaped beam, and has the similar shape as the transmission fan-shaped space T1. That is, the second wave transmitter 12 transmits the second transmission wave in the second transmission fan-shaped space T2. The second transmission fan-shaped space T2 is the space which includes a center axis T2x at which the transmission signal power of the second transmission fan-shaped space T2 is the maximum, and where the transmission signal power is halved from the maximum to -3dB. In this modification, the second wave transmitter 12 is provided to the bottom of the ship so that the center axis T2x of the second transmission fan-shaped space T2 becomes oblique to the vertical direction (the z-axis direction in Fig. 19). Note that the second transmission fan-shaped space T2 may be the range where the transmission signal power is reduced by -n4dB (n4 is set according to the detection target object etc. of the underwater detection apparatus 1D) from the maximum.

The second transmission fan-shaped space T2 has a third transmission width Tθ3 within the first plane P1 and have a fourth transmission width Tθ4 in the second plane P2, where the third transmission width Tθ3 is wider than the fourth transmission width Tθ4 (Tθ4<Tθ3). The second transmission fan-shaped space T2 is formed in the fan shape both in the first plane P1 and the second plane P2. In this embodiment, the third transmission width Tθ3 is set same as the first transmission width Tθ1. In addition, the fourth transmission width Tθ4 is set same as the second transmission width Tθ2. In this embodiment, the second reception width Rθ2 of the reception fan-shaped space R1 is set narrower than the fourth transmission width Tθ4 of the second transmission fan-shaped space T2. Further, in the second plane P2, among a pair of edges Te3 and Te4 of the second transmission fan-shaped space T2, the edge Te3 is located inside the reception fan-shaped space R1.

Note that, as described above, when the transmission signal power at the edges Te1 and Te2 of the transmission fan-shaped space T1 is the magnitude of -3dB from the transmission signal power at the center axis Tx, the second transmission width Tθ2 < the first transmission width Tθ1. On the other hand, for example, when the transmission signal power at the edges Te1 and Te2 of the transmission fan-shaped space T1 is the magnitude of -10dB, which is smaller than -3dB, from the transmission signal power at the center axis Tx, it is possible to have the second transmission width Tθ2 > the first transmission width Tθ1.

Moreover, as described above, when the transmission signal power at the edges Te3 and Te4 of the second transmission fan-shaped space T2 is the magnitude of -3dB from the transmission signal power at the center axis T2x, the fourth transmission width Tθ4 < the third transmission width Tθ3. On the other hand, for example, when the transmission signal power at the edges Te3 and Te4 of the second transmission fan-shaped space T2 is the magnitude of -10dB, which is smaller than -3dB, from the transmission signal power at the center axis T2x, it is possible to have the fourth transmission width Tθ4 > the third transmission width Tθ3.

The angle formed by the direction which is perpendicular to the wave transmitting surface 12b of the linear array and in which the second transmission fan-shaped space T2 is formed, and the horizontal plane, may be any angle, as long as it is within the range from 0° which is the angle in case where the linear array is disposed in the vertical direction to 90° which is the angle in case where the linear array is disposed in the horizontal direction.

About the rotation axis L1 in the second plane P2, the center axis T2x of the second transmission fan-shaped space T2 is a line at which the transmission signal power is the highest in the second transmission fan-shaped space T2. On the other hand, about the rotation axis L1 in the second plane P2, the third transmission edge Te3 and the fourth transmission edge Te4 as the pair of edges of the second transmission fan-shaped space T2 are the lines at which the transmission signal power is the lowest in the second transmission fan-shaped space T2. The transmission signal power in the transmission edges Te3 and Te4 is a half of the transmission signal power at the center axis T2x. The third transmission edge Te3 is the trailing edge in the second direction K2, and the fourth transmission edge Te4 is the leading edge in the second direction K2.

In this embodiment, one of the pair of transmission edges Te1 and Te2 of the transmission fan-shaped space T1 is located in the reception fan-shaped space R1, and one of the pair of transmission edges Te3 and Te4 of the second transmission fan-shaped space T2 is located in the reception fan-shaped space R1. In detail, the wave transmitter 11 and the wave receiver 13 are configured so that the second transmission edge Te2, which is the trailing edge in the first direction K1, is overlapped with the first reception edge Re1, which is the leading edge in the first direction K1. Since the relative spatial relationship between the transmission fan-shaped space T1 and the reception fan-shaped space R1 is the same as the first embodiment, the description is omitted.

Moreover, as for the second transmission fan-shaped space T2, the second wave transmitter 12 and the wave receiver 13 are configured so that the third transmission edge Te3, which is the trailing edge in the second direction K2, is overlapped with the second reception edge Re2, which is the leading edge in the second direction K2. That is, in the second plane P2, the second reception edge Re2 is located on the third transmission edge Te3 which is on the trailing side of the second transmission fan-shaped space T2 in the second direction K2. In this configuration, although the second transmission fan-shaped space T2 and the reception fan-shaped space R1 are overlapped with each other at the third transmission edge Te3 and the second reception edge Re2, they are not overlapped with each other at other positions. Moreover, the center axis T2x of the second transmission fan-shaped space T2 is not overlapped with the reception fan-shaped space R1, and the center axis R1x of the reception fan-shaped space R1 is not overlapped with the second transmission fan-shaped space T2.

As described above, in the second plane P2, the reception fan-shaped space R1 is offset to one side of the transmission fan-shaped space T1 in the first direction K1 (in detail, to the rearward or backward side in the first direction K1). Moreover, the reception fan-shaped space R1 is offset to one side of the second transmission fan-shaped space T2 in the second direction K2 (in detail, to the rearward or backward side in the second direction K2).

Note that, the transmission fan-shaped space T1 and the reception fan-shaped space R1 may contact at positions other than the contacting position between the second transmission edge Te2 and the first reception edge Re1. Moreover, the second transmission fan-shaped space T2 and the reception fan-shaped space R1 may contact at positions other than the contacting position between the third transmission edge Te3 and the second reception edge Re2.

The motor 16 integrally rotates the wave transmitters 11 and 12 and the wave receiver 13 in the first direction K1 or the second direction K2 about the rotation axis L1. That is, the motor 16 rotates the transmission fan-shaped space T1, the second transmission fan-shaped space T2, and the reception fan-shaped space R1.

The transmitting part 21 amplifies the transmission pulse signal generated by the signal processor 3, and applies the amplified signal selectively to the wave transmitter 11 or the second wave transmitter 12 as the amplified transmission pulse signal. Therefore, from the wave transmitter 11 or the second wave transmitter 12, the transmission pulse wave corresponding to the amplified transmission pulse signal is transmitted.

When the signal processor 3 rotates the wave transmitters 11 and 12 and the wave receiver 13 in the first direction K1 in the detection area S1, it transmits the transmission pulse wave from the wave transmitter 11 to the transmission fan-shaped space T1, and performs the beam forming, for the reception wave received by the wave receiver 13, by using the reception result of the reception fan-shaped space R1 to generate the image data indicative of the detection result. At this time, the transmission pulse wave is not transmitted from the second wave transmitter 12.

On the other hand, when the signal processor 3 rotates the wave transmitters 11 and 12 and the wave receiver 13 in the second direction K2 in the detection area S1, it transmits the transmission pulse wave from the second wave transmitter 12 to the second transmission fan-shaped space T2, and performs the beam forming, for the reception wave received by the wave receiver 13, by using the reception result of the reception fan-shaped space R1 to generate the image data indicative of the detection result. At this time, the transmission pulse wave is not transmitted from the wave transmitter 11.

According to the configuration of the wave transceiving unit 5D, the underwater detection apparatus 1D can detect the target object in the three-dimensional space covering the large area centering on the ship S, and estimate the three-dimensional position of the target object in this space.

As described above, according to the underwater detection apparatus 1D of the third embodiment, the underwater detection can be performed even when the wave transmitters 11 and 12 and the wave receiver 13 rotate either in the first direction K1 or the second direction K2. As a result, the motor 16 can also rotate so as to oscillate within the angle range of 360°. Therefore, the slip ring becomes unnecessary. Further, the operation for physically reversing the wave transmitters 11 and 12 and the wave receiver 13 is unnecessary.

### [Other Modifications]

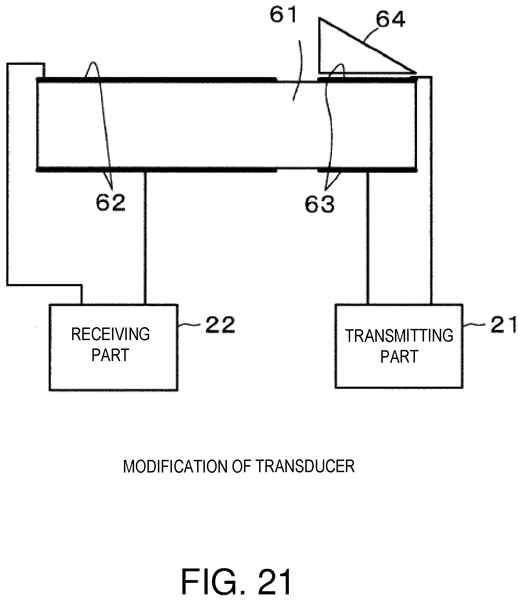

The embodiments and the modifications of the present disclosure are described above. However, the present disclosure is not limited to the above configuration, and may variously be changed or modified without departing from the scope of the present disclosure.
(1) In the embodiments and the modifications, the wave transmitters 11 and 12 have the plurality of wave transmission elements 11a and 12a, respectively. However, this configuration may be altered. For example, each of the wave transmitters 11 and 12 may have a single wave transmission element. Moreover, the wave receivers 13 and 14 have the plurality of wave reception elements 13a and 14a, respectively. However, this configuration may be altered. For example, each wave receiver may have a single wave reception element. When each of the wave receivers 13 and 14 has one wave reception element, a two-dimensional detection result image can be displayed on the display unit.
(2) Moreover, in the above embodiments and the above modifications, the wave transmitters 11 and 12 dedicated for transmission and the wave receivers 13 and 14 dedicated for reception are provided. However, this configuration may be altered. For example, a transducer having the substantial part illustrated in Fig. 21 as the modification may be used to perform the transmission of the transmission pulse wave and the reception of the reflection wave. This transducer has one piezo-electric element 61, a pair of the reception electrodes 62 provided to the front surface and the back surface of the piezo-electric element 61, a pair of the transmission electrodes 63 provided to the front surface and the back surface of the piezo-electric element 61, and an acoustic lens 64 provided to one of the transmission electrodes 63. The pair of the reception electrodes 62 are connected to the receiving part 22. Moreover, the pair of the transmission electrodes 63 are connected to the transmitting part 21.
(3) Moreover, in the above embodiments and the above modifications, although the underwater detection apparatus detects the perimeter below the ship S, this configuration may be altered. The present disclosure is also applicable to other underwater detection apparatuses, such as a forward looking sonar, a starboard looking sonar, and a port looking sonar.

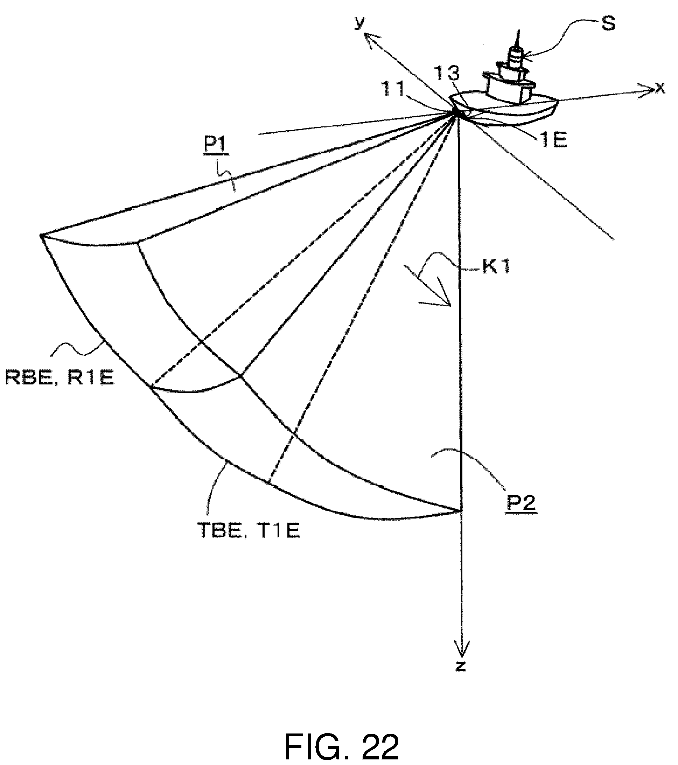

For example, with reference to Fig. 22 which is a view schematically illustrating an underwater detection apparatus 1E according to a fourth embodiment of the present disclosure, this underwater detection apparatus 1E may be used as the forward looking sonar. For example, the underwater detection apparatus 1E has the configuration same as any of the underwater detection apparatuses 1, 1A, 1C, and 1D. In the fourth embodiment, the underwater detection apparatus 1E has the configuration same as the underwater detection apparatus 1. A transceiving unit 5E is installed in the bow of the ship S.

The wave transmitter 11 of the wave transceiving unit 5E forms a transmission fan-shaped space T1E forward of the ship S. Although the transmission fan-shaped space T1E is the similar shape as the transmission fan-shaped space T1, the direction to the seabed surface differs. Moreover, the wave receiver 13 of the wave transceiving unit 5E receives a signal from a reception fan-shaped space R1E forward of the ship S. Although the reception fan-shaped space R1E is the similar shape as the reception fan-shaped space R1, the direction to the seabed surface differs. In the fourth embodiment, the first plane P1 is a plane including a horizontal straight line. Moreover, the second plane P2 is a vertical plane. The transmission fan-shaped space T1E and the reception fan-shaped space R1E rotate about a horizontal axis extending to the left and right of the ship S (the y-axis illustrated in Fig. 22). As illustrated in Fig. 22, when the reception fan-shaped space R1E is located above the transmission fan-shaped space T1E, the first direction K1 is a direction about the y-axis from the sea surface to the seabed. On the other hand, when the detection is performed while the reception fan-shaped space R1E is located below the transmission fan-shaped space T1E, the second direction K2 is a direction about the y-axis from the seabed to the sea surface, and it is opposite from the first direction K1.

Also in the underwater detection apparatus 1E according to the fourth embodiment, both the speed-up of the updating cycle of the detection result image and the prevention of the reduction in the detection range forward of the ship S can be achieved.

(4) Moreover, in the above embodiments and the above modifications, the echo intensity at each angle ϕ in the reception fan-shaped spaces R1 and R2 is calculated by using the delay-and-sum beam forming as the beam forming technique in the fan area detection data generating module 36. However, this configuration may be altered. For example, the echo intensity at each angle ϕ in the reception fan-shaped spaces R1 and R2 may be calculated by using an adaptive beam forming technique, such as the Capon method and the MUSIC method. Therefore, compared with the case where the delay-and-sum beam forming is used, an angle resolution in the ϕ-direction in this apparatus can be improved.

(5) In the above embodiments and the above modifications, although the wave transmitters 11 are formed in the form of the linear array, this configuration may be altered. For example, by arraying the plurality of wave transmission elements 11a along an arc, the transmission fan-shaped spaces T1 and T2 can be expanded in ϕ-direction to detect a larger area, or the source level can be increased while maintaining the sizes of the transmission fan-shaped spaces T1 and T2.

(6) In the above embodiments and the above modifications, although the wave receivers 13 and 14 are each formed in the form of the linear array, the configuration may be altered. For example, by arranging the plurality of wave reception elements 13a and 14a along an arc, the reception fan-shaped spaces R1 and R2 can be expanded in the ϕ-direction to detect a larger area.

(7) In the above embodiments and the above modifications, although the wave transmitters 11 and 12, and the wave receivers 13 and 14 are rotated by the single motor 16, the configuration may be altered. For example, the wave transmitters 11 and 12, and the wave receivers 13 and 14 may be rotated by separate motors.

### DESCRIPTION OF REFERENCE CHARACTERS

- 1, 1A, 1C, 1D, 1E: Underwater Detection Apparatus
- 11: Wave Transmitter (Transmission Transducer)
- 12: Second Wave Transmitter (Second Transmission Transducer)
- 13: Wave Receiver (Reception Transducer)
- 14: Second Wave Receiver (Second Reception Transducer)
- 16: Motor
- 22: Receiving Part (Reception Circuitry)
- 31: Controller
- 39: Hardware Processor (Processing Circuitry)
- 40, 40B: Direction Change Mechanism
- K1: First Direction
- K2: Second Direction
- P1: First Plane
- P2: Second Plane
- R1: Reception Fan-Shaped Space
- R2: Second Reception Fan-Shaped Space
- Re1, Re2: Pair of Edges of Reception Fan-Shaped Space
- Re3, Re4: Pair of Edges of Second Reception Fan-Shaped Space
- Rθ1: First Reception Width
- Rθ2: Second Reception Width
- Rθ3: Third Reception Width
- Rθ4: Fourth Reception Width
- T1: Transmission Fan-Shaped Space
- Te1, Te2: Pair of Edges of Transmission Fan-Shaped Space
- Tθ1: First Transmission Width
- Tθ2: Second Transmission Width
- Tθ3: Third Transmission Width
- Tθ4: Fourth Transmission Width
- V1: First Speed
- V2: Second Speed

## Claims

1. An underwater detection apparatus (1, 1A, 1C, 1D, 1E), comprising:
a transmission transducer (11, 12) configured to transmit a transmission wave within a given transmission fan-shaped space (T1, T2, T1E), the transmission fan-shaped space (T1, T2, T1E) having a first transmission width (Tθ1, Tθ3) in a given first plane (P1) and a second transmission width (Tθ2, Tθ4) in a second plane (P2) perpendicular to the first plane (P1);
a reception transducer (13, 14) configured to receive a reflection wave of the transmission wave within a given reception fan-shaped space (R1, R2, R1E), the reception fan-shaped space (R1, R2, R1E) having a first reception width (Rθ1, Rθ3) in the first plane (P1) and a second reception width (Rθ2, Rθ4) in the second plane (P2), the second reception width (Rθ2, Rθ4) being narrower than the second transmission width (Tθ2, Tθ4); and in the second plane (P2), one of a pair of edges of the transmission fan shaped space (T1, T2, T1E) being within the reception fan shaped space (R1, R2, R1E);
a motor (16) configured to rotate the transmission fan-shaped space (T1, T2, T1E) and the reception fan-shaped space (R1, R2, R1E); and
a controller (31) configured to control the motor (16);
**characterized in that**:
the controller (31) controls the motor (16) to rotate at a given first speed (V1) when the transmission transducer (11) and the reception transducer (13) perform an underwater detection, and at a second speed (V2) faster than the first speed (V1) when the underwater detection is not performed;
wherein the controller (31) controls the motor (16) to rotate in a given first direction in both cases when the underwater detection is performed and when the underwater detection is not performed.

2. The underwater detection apparatus (1, 1A, 1C, 1D, 1E) of claim 1, wherein,
when the motor (16) rotates in the first given direction, the one of the pair of edges of the transmission fan-shaped space (T1, T2, T1E) is an edge on a trailing side in the rotation direction.

3. The underwater detection apparatus (1, 1A, 1C, 1D, 1E) of claim 1 or claim 2, further comprising a slip ring configured to prevent twisting of cables connected to the motor (16) during rotation of the motor (16).

4. The underwater detection apparatus (1C) of claim 1 or 2, further comprising:
a second reception transducer (14) configured to receive a reflection wave of the transmission wave within a given second reception fan-shaped space (R2), the second reception fan-shaped space (R2) having a third reception width (Pθ3) in the first plane (P1) and a fourth reception width (Rθ4) in the second plane (P2), the fourth reception width (Rθ4) being narrower than the second transmission width (Tθ2) of the transmission fan-shaped space (T1), and in the second plane (P2), another one of the pair of edges of the transmission fan-shaped space (T1), different from the one edge within the first reception fan-shaped space (R1), being within the second reception fan-shaped space (R2), wherein
the motor (16) is configured to rotate the transmission fan-shaped space (T1), the reception fan-shaped space (R1) and the second reception fan-shaped space (R2).

5. The underwater detection apparatus (1D) of claim 1 or 2, further comprising:
a second transmission transducer (12) configured to transmit a second transmission wave within a given second transmission fan-shaped space (T2), the second transmission fan-shaped space (T2) having a third transmission width (Tθ3) in the first plane (P1) and a fourth transmission width (Tθ4) in the second plane (P2), wherein
the second reception width (Rθ2) of the reception fan-shaped space (R1) is narrower than the fourth transmission width (Tθ4) of the second transmission fan-shaped space (T2), and in the second plane (P2), one of a pair of edges of the second transmission fan-shaped space (T2) is within the reception fan-shaped space (R1); and
the motor (16) is configured to rotate the transmission fan-shaped space (T1), the reception fan-shaped space (R1) and the second transmission fan-shaped space (T2).

6. The underwater detection apparatus (1, 1A, 1C, 1D, 1E) of any one of the previous claims, wherein
the transmission fan-shaped space (T1, T2, T1E) is a space in which a power of the transmission wave transmitted by the transmission transducer (11, 12) is equal to or higher than half of a maximum power of the transmission wave, and
the reception fan-shaped space (R1, R2, R1E) is a space in which a reception power sensitivity of the reception transducer (13, 14) is equal to or higher than half of a maximum sensitivity of the reception transducer (13, 14).

7. The underwater detection apparatus (1, 1A, 1C, 1D) of any one of the previous claims, wherein
the first plane (P1) is a vertical plane, and
the second plane (P2) is a horizontal plane.

8. The underwater detection apparatus (1E) of any one of claims 1 to 6, wherein
the first plane (P1) is a plane including a horizontal line, and
the second plane (P2) is a vertical plane.

9. The underwater detection apparatus (1, 1A, 1C, 1D, 1E) of any one of the previous claims, wherein
the motor (16) rotates the transmission fan-shaped space (T1, T2, T1E) and the reception fan-shaped space (R1, R2, R1E) about an axis perpendicular to the second plane (P2).

10. The underwater detection apparatus (1, 1A, 1C, 1D, 1E) of any one of the previous claims, wherein
the transmission transducer (11, 12) and the reception transducer (13, 14) are different transducers.

11. The underwater detection apparatus (1, 1A, 1C, 1D, 1E) of any one of the previous claims, wherein
a transmission surface of the transmission transducer (11, 12) is disposed to be oblique with respect to a vertical plane by the transmission transducer (11, 12) being rotated about a first horizontal axis;
a reception surface of the reception transducer (13, 14) is disposed to be oblique with respect to a vertical plane by the reception transducer (13, 14) being rotated about a second horizontal axis; and
the first horizontal axis and the second horizontal axis are not in a common vertical plane.

12. An underwater detection method, comprising:
transmitting a transmission wave within a given transmission fan-shaped space (T1, T2, T1E), the transmission fan-shaped space (T1, T2, T1E) having a first transmission width (Tθ1, Tθ3) in a given first plane (P1) and a second transmission width (Tθ2, Tθ4) in a second plane (P2) perpendicular to the first plane (P1);
receiving a reflection wave of the transmission wave within a given reception fan-shaped space (R1, R2, R1E), the reception fan-shaped space (R1, R2, R1E) having a first reception width (Rθ1, Rθ3) in the first plane (P1) and a second reception width (Rθ2, Rθ4) in the second plane (P2), and the second reception width (Rθ2, Rθ4) being narrower than the second transmission width (Tθ2, Tθ4);
in the second plane (P2), disposing one of a pair of edges of the transmission fan-shaped space (T1, T2, T1E) within the reception fan-shaped space (R1, R2, R1E); and
rotating, by a motor (16), the transmission fan-shaped space (T1, T2, T1E) and the reception fan-shaped space (R1, R2, R1E);
**characterized by**:
controlling the motor (16) to rotate at a given first speed (V1) when an underwater detection is being performed, and at a second speed (V2) faster than the first speed (V1) when the underwater detection is not being performed;
and
controlling the motor (16) to rotate in a given first direction in both cases when the underwater detection is being performed and when the underwater detection is not being performed.

## Patentansprüche

1. Unterwasser-Detektionsvorrichtung (1, 1A, 1C, 1D, 1E), die Folgendes umfasst:
einen Sendewandler (11, 12), konfiguriert zum Senden einer Sendewelle innerhalb eines gegebenen fächerförmigen Senderaums (T1, T2, T1E), wobei der fächerförmige Senderaum (T1, T2, T1E) eine erste Sendebreite (Tθ1, Tθ3) in einer gegebenen ersten Ebene (P1) und eine zweite Sendebreite (Tθ2, Tθ4) in einer zweiten Ebene (P2) lotrecht zur ersten Ebene (P1) aufweist;
einen Empfangswandler (13, 14), konfiguriert zum Empfangen einer Reflexionswelle der Sendewelle innerhalb eines gegebenen fächerförmigen Empfangsraums (R1, R2, R1E), wobei der fächerförmige Empfangsraum (R1, R2, R1E) eine erste Empfangsbreite (Rθ1, Rθ3) in der ersten Ebene (P1) und eine zweite Empfangsbreite (Rθ2, Rθ4) in der zweiten Ebene (P2) aufweist, wobei die zweite Empfangsbreite (Rθ2, Rθ4) schmaler ist als die zweite Sendebreite (Tθ2, Tθ4); und in der zweiten Ebene (P2) einer aus einem Paar Ränder des fächerförmigen Senderaums (T1, T2, T1E) innerhalb des fächerförmigen Empfangsraums (R1, R2, R1E) liegt;
einen Motor (16), konfiguriert zum Drehen des fächerförmigen Senderaums (T1, T2, T1E) und des fächerförmigen Empfangsraums (R1, R2, R1E); und
eine Steuerung (31), konfiguriert zum Steuern des Motors (16);
**dadurch gekennzeichnet, dass**:
die Steuerung (31) den Motor (16) so steuert, dass er sich mit einer gegebenen ersten Geschwindigkeit (V1) dreht, wenn der Sendewandler (11) und der Empfangswandler (13) eine Unterwasser-Detektion durchführen, und er sich mit einer zweiten Geschwindigkeit (V2) dreht, die höher ist als die erste Geschwindigkeit (V1), wenn die Unterwasser-Detektion nicht durchgeführt wird;
wobei die Steuerung (31) den Motor (16) so steuert, dass er sich in beiden Fällen, bei Durchführung der Unterwasser-Detektion und bei Nichtdurchführung der Unterwasser-Detektion, in einer gegebenen ersten Richtung dreht.

2. Unterwasser-Detektionsvorrichtung (1, 1A, 1C, 1D, 1E) nach Anspruch 1, wobei,
wenn sich der Motor (16) in der ersten gegebenen Richtung dreht, der eine aus dem Paar Ränder des fächerförmigen Senderaums (T1, T2, T1E) ein Rand auf einer in der Drehrichtung hinteren Seite ist.

3. Unterwasser-Detektionsvorrichtung (1, 1A, 1C, 1D, 1E) nach Anspruch 1 oder Anspruch 2, die ferner einen Schleifring umfasst, der zum Verhindern von Verdrehen der mit dem Motor (16) verbundenen Kabel während der Drehung des Motors (16) konfiguriert ist.

4. Unterwasser-Detektionsvorrichtung (1C) nach Anspruch 1 oder 2, die ferner Folgendes umfasst:
einen zweiten Empfangswandler (14), konfiguriert zum Empfangen einer Reflexionswelle der Sendewelle innerhalb eines gegebenen zweiten fächerförmigen Empfangsraums (R2), wobei der zweite fächerförmige Empfangsraum (R2) eine dritte Empfangsbreite (Rθ3) in der ersten Ebene (P1) und eine vierte Empfangsbreite (Rθ4) in der zweiten Ebene (P2) aufweist, wobei die vierte Empfangsbreite (Rθ4) schmaler ist als die zweite Sendebreite (Tθ2) des fächerförmigen Senderaums (T1), und in der zweiten Ebene (P2) ein anderer aus dem Paar Ränder des fächerförmigen Senderaums (T1), die sich von dem einen Rand innerhalb des ersten fächerförmigen Empfangsraums (RI) unterscheidet, innerhalb des zweiten fächerförmigen Empfangsraums (R2) liegt, wobei
der Motor (16) zum Drehen des fächerförmigen Senderaums (T1), des fächerförmigen Empfangsraum (R1) und des zweiten fächerförmigen Empfangsraums (R2) konfiguriert ist.

5. Unterwasser-Detektionsvorrichtung (1D) nach Anspruch 1 oder 2, die ferner Folgendes umfasst:
einen zweiten Sendewandler (12), konfiguriert zum Senden einer zweiten Sendewelle innerhalb eines gegebenen zweiten fächerförmigen Senderaums (T2), wobei der zweite fächerförmige Senderaum (T2) eine dritte Sendebreite (Tθ3) in der ersten Ebene (P1) und eine vierte Sendebreite (Tθ4) in der zweiten Ebene (P2) aufweist, wobei
die zweite Empfangsbreite (Rθ2) des fächerförmigen Empfangsraums (R1) schmaler ist als die vierte Sendebreite (Tθ4) des zweiten fächerförmigen Senderaums (T2), und in der zweiten Ebene (P2) einer aus einem Paar Ränder des zweiten fächerförmigen Senderaums (T2) innerhalb des fächerförmigen Empfangsraums (R1) liegt; und
der Motor (16) zum Drehen des fächerförmigen Senderaums (T1), des fächerförmigen Empfangsraums (R1) und des zweiten fächerförmigen Senderaums (T2) konfiguriert ist.

6. Unterwasser-Detektionsvorrichtung (1, 1A, 1C, 1D, 1E) nach einem der vorherigen Ansprüche, wobei
der fächerförmige Senderaum (T1, T2, T1E) ein Raum ist, in dem eine Leistung der vom Sendewandler (11, 12) übertragenen Sendewelle gleich oder höher als die Hälfte einer maximalen Leistung der Sendewelle ist, und
der fächerförmige Empfangsraum (R1, R2, R1E) ein Raum ist, in dem eine Empfangsleistungssensitivität des Empfangswandlers (13, 14) gleich oder höher als die Hälfte einer maximalen Sensitivität des Empfangswandlers (13, 14) ist.

7. Unterwasser-Detektionsvorrichtung (1, 1A, 1C, 1D) nach einem der vorherigen Ansprüche, wobei
die erste Ebene (P1) eine vertikale Ebene ist und
die zweite Ebene (P2) eine horizontale Ebene ist.

8. Unterwasser-Detektionsvorrichtung (1E) nach einem der Ansprüche 1 bis 6, wobei
die erste Ebene (P1) eine Ebene ist, die eine horizontale Linie enthält, und
die zweite Ebene (P2) eine vertikale Ebene ist.

9. Unterwasser-Detektionsvorrichtung (1, 1A, 1C, 1D, 1E) nach einem der vorherigen Ansprüche, wobei
der Motor (16) den fächerförmigen Senderaum (T1, T2, T1E) und den fächerförmigen Empfangsraum (R1, R2, R1E) um eine Achse lotrecht zur zweiten Ebene (P2) dreht.

10. Unterwasser-Detektionsvorrichtung (1, 1A, 1C, 1D, 1E) nach einem der vorherigen Ansprüche, wobei
der Sendewandler (11, 12) und der Empfangswandler (13, 14) unterschiedliche Wandler sind.

11. Unterwasser-Detektionsvorrichtung (1, 1A, 1C, 1D, 1E) nach einem der vorherigen Ansprüche, wobei
eine Sendefläche des Sendewandlers (11, 12) so angeordnet ist, dass sie in Bezug auf eine vertikale Ebene schräg ist, indem der Sendewandler (11, 12) um eine erste horizontale Achse gedreht wird;
eine Empfangsfläche des Empfangswandlers (13, 14) so angeordnet ist, dass sie in Bezug auf eine vertikale Ebene schräg ist, indem der Empfangswandler (13, 14) um eine zweite horizontale Achse gedreht wird; und
die erste horizontale Achse und die zweite horizontale Achse nicht in einer gemeinsamen vertikalen Ebene liegen.

12. Unterwasser-Detektionsverfahren, das Folgendes beinhaltet:
Senden einer Sendewelle innerhalb eines gegebenen fächerförmigen Senderaums (T1, T2, T1E), wobei der fächerförmige Senderaum (T1, T2, T1E) eine erste Sendebreite (Tθ1, Tθ3) in einer gegebenen ersten Ebene (P1) und eine zweite Sendebreite (Tθ2, Tθ4) in einer zweiten Ebene (P2) lotrecht zur ersten Ebene (P1) aufweist;
Empfangen einer Reflexionswelle der Sendewelle innerhalb eines gegebenen fächerförmigen Empfangsraums (R1, R2, R1E), wobei der fächerförmige Empfangsraum (R1, R2, R1E) eine erste Empfangsbreite (Rθ1, Rθ3) in der ersten Ebene (P1) und eine zweite Empfangsbreite (Rθ2, Rθ4) in der zweiten Ebene (P2) aufweist, und wobei die zweite Empfangsbreite (Rθ2, Rθ4) schmaler ist als die zweite Sendebreite (Tθ2, Tθ4);
Anordnen, in der zweiten Ebene (P2), eines aus einem Paar Ränder des fächerförmigen Senderaums (T1, T2, T1E) innerhalb des fächerförmigen Empfangsraums (R1, R2, R1E); und
Drehen, durch einen Motor (16), des fächerförmigen Senderaums (T1, T2, T1E) und des fächerförmigen Empfangsraums (R1, R2, R1E);
**gekennzeichnet durch**:
Steuern des Motors (16) so, dass er sich mit einer gegebenen ersten Geschwindigkeit (V1) dreht, wenn eine Unterwasser-Detektion durchgeführt wird, und er sich mit einer zweiten Geschwindigkeit (V2) dreht, die höher als die erste Geschwindigkeit (V1) ist, wenn die Unterwasser-Detektion nicht durchgeführt wird;
und
Steuern des Motors (16) so, dass er sich in beiden Fällen, bei Durchführung der Unterwasser-Detektion und bei Nichtdurchführung der Unterwasser-Detektion, in einer gegebenen ersten Richtung dreht.

## Revendications

1. Appareil de détection sous-marine (1, 1A, 1C, 1D, 1E), comprenant :
un transducteur d'émission (11, 12) configuré pour émettre une onde d'émission dans un espace d'émission en éventail (T1, T2, T1E) donné, l'espace d'émission en éventail (T1, T2, T1E) ayant une première largeur d'émission (Tθ1, Tθ3) dans un premier plan (P1) donné et une deuxième largeur d'émission (Tθ2, Tθ4) dans un second plan (P2) perpendiculaire au premier plan (P1) ;
un transducteur de réception (13, 14) configuré pour recevoir une onde de réflexion de l'onde d'émission dans un espace de réception en éventail (R1, R2, R1E) donné, l'espace de réception en éventail (R1, R2, R1E) ayant une première largeur de réception (Rθ1, Rθ3) dans le premier plan (P1) et une deuxième largeur de réception (Rθ2, Rθ4) dans le second plan (P2), la deuxième largeur de réception (Rθ2, Rθ4) étant plus étroite que la deuxième largeur d'émission (Tθ2, Tθ4) ; et dans le second plan (P2), un bord parmi une paire de bords de l'espace d'émission en éventail (T1, T2, T1E) étant situé dans l'espace de réception en éventail (R1, R2, R1E) ;
un moteur (16) configuré pour mettre en rotation l'espace d'émission en éventail (T1, T2, T1E) et l'espace de réception en éventail (R1, R2, R1E) ; et
un dispositif de commande (31) configuré pour commander le moteur (16) ;
l'appareil étant **caractérisé en ce que** :
le dispositif de commande (31) commande le moteur (16) en rotation à une première vitesse (V1) donnée lorsque le transducteur d'émission (11) et le transducteur de réception (13) effectuent une détection sous-marine, et à une seconde vitesse (V2), plus rapide que la première vitesse (V1), lorsque la détection sous-marine n'est pas effectuée ;
le dispositif de commande (31) commandant le moteur (16) en rotation dans un premier sens donné dans les deux cas, lorsque la détection sous-marine est effectuée et lorsque la détection sous-marine n'est pas effectuée.

2. Appareil de détection sous-marine (1, 1A, 1C, 1D, 1E) selon la revendication 1, dans lequel :
lorsque le moteur (16) est en rotation dans le premier sens donné, ledit bord parmi la paire de bords de l'espace d'émission en éventail (T1, T2, T1E) est un bord situé sur un côté arrière dans le sens de rotation.

3. Appareil de détection sous-marine (1, 1A, 1C, 1D, 1E) selon la revendication 1 ou 2, comprenant en outre une bague collectrice configurée pour empêcher la torsion de câbles connectés au moteur (16) pendant la rotation du moteur (16).

4. Appareil de détection sous-marine (1C) selon la revendication 1 ou 2, comprenant en outre :
un second transducteur de réception (14) configuré pour recevoir une onde de réflexion de l'onde d'émission dans un second espace de réception en éventail (R2) donné, le second espace de réception en éventail (R2) ayant une troisième largeur de réception (Rθ3) dans le premier plan (P1) et une quatrième largeur de réception (Rθ4) dans le second plan (P2), la quatrième largeur de réception (Rθ4) étant plus étroite que la deuxième largeur d'émission (Tθ2) de l'espace d'émission en éventail (T1), et dans le second plan (P2), un autre bord parmi la paire de bords de l'espace d'émission en éventail (T1), différent dudit bord situé dans le premier espace de réception en éventail (R1), étant situé dans le second espace de réception en éventail (R2),
le moteur (16) étant configuré pour mettre en rotation l'espace d'émission en éventail (T1), l'espace de réception en éventail (R1) et le second espace de réception en éventail (R2).

5. Appareil de détection sous-marine (1D) selon la revendication 1 ou 2, comprenant en outre :
un second transducteur d'émission (12) configuré pour émettre une seconde onde d'émission dans un second espace d'émission en éventail (T2) donné, le second espace d'émission en éventail (T2) ayant une troisième largeur d'émission (Tθ3) dans le premier plan (P1) et une quatrième largeur d'émission (Tθ4) dans le second plan (P2),
la deuxième largeur de réception (Rθ2) de l'espace de réception en éventail (R1) étant plus étroite que la quatrième largeur d'émission (Tθ4) du second espace d'émission en éventail (T2), et dans le second plan (P2), un bord parmi une paire de bords du second espace d'émission en éventail (T2) étant situé dans l'espace de réception en éventail (R1) ; et
le moteur (16) étant configuré pour mettre en rotation l'espace d'émission en éventail (T1), l'espace de réception en éventail (R1) et le second espace d'émission en éventail (T2).

6. Appareil de détection sous-marine (1, 1A, 1C, 1D, 1E) selon l'une quelconque des revendications précédentes, dans lequel :
l'espace d'émission en éventail (T1, T2, T1E) est un espace dans lequel une puissance de l'onde d'émission émise par le transducteur d'émission (11, 12) est supérieure ou égale à la moitié d'une puissance maximale de l'onde d'émission, et
l'espace de réception en éventail (R1, R2, R1E) est un espace dans lequel une sensibilité de puissance de réception du transducteur de réception (13, 14) est supérieure ou égale à la moitié d'une sensibilité maximale du transducteur de réception (13, 14).

7. Appareil de détection sous-marine (1, 1A, 1C, 1D) selon l'une quelconque des revendications précédentes, dans lequel :
le premier plan (P1) est un plan vertical, et
le second plan (P2) est un plan horizontal.

8. Appareil de détection sous-marine (1E) selon l'une quelconque des revendications 1 à 6, dans lequel :
le premier plan (P1) est un plan comprenant une ligne horizontale, et
le second plan (P2) est un plan vertical.

9. Appareil de détection sous-marine (1, 1A, 1C, 1D, 1E) selon l'une quelconque des revendications précédentes, dans lequel :
le moteur (16) met en rotation l'espace d'émission en éventail (T1, T2, T1E) et l'espace de réception en éventail (R1, R2, R1E) autour d'un axe perpendiculaire au second plan (P2).

10. Appareil de détection sous-marine (1, 1A, 1C, 1D, 1E) selon l'une quelconque des revendications précédentes, dans lequel :
le transducteur d'émission (11, 12) et le transducteur de réception (13, 14) sont des transducteurs différents.

11. Appareil de détection sous-marine (1, 1A, 1C, 1D, 1E) selon l'une quelconque des revendications précédentes, dans lequel :
une surface d'émission du transducteur d'émission (11, 12) est disposée de manière à être oblique par rapport à un plan vertical lorsque le transducteur d'émission (11, 12) est en rotation autour d'un premier axe horizontal ;
une surface de réception du transducteur de réception (13, 14) est disposée de manière à être oblique par rapport à un plan vertical lorsque le transducteur de réception (13, 14) est en rotation autour d'un second axe horizontal ; et
le premier axe horizontal et le second axe horizontal ne sont pas dans un plan vertical commun.

12. Procédé de détection sous-marine, comprenant les étapes consistant à :
émettre une onde d'émission dans un espace d'émission en éventail (T1, T2, T1E) donné, l'espace d'émission en éventail (T1, T2, T1E) ayant une première largeur d'émission (Tθ1, Tθ3) dans un premier plan (P1) donné et une deuxième largeur d'émission (Tθ2, Tθ4) dans un second plan (P2) perpendiculaire au premier plan (P1) ;
recevoir une onde de réflexion de l'onde d'émission dans un espace de réception en éventail (R1, R2, R1E) donné, l'espace de réception en éventail (R1, R2, R1E) ayant une première largeur de réception (Rθ1, Rθ3) dans le premier plan (P1) et une deuxième largeur de réception (Rθ2, Rθ4) dans le second plan (P2), et la deuxième largeur de réception (Rθ2, Rθ4) étant plus étroite que la deuxième largeur d'émission (Tθ2, Tθ4) ;
dans le second plan (P2), disposer un bord parmi une paire de bords de l'espace d'émission en éventail (T1, T2, T1E) dans l'espace de réception en éventail (R1, R2, R1E) ; et
mettre en rotation, par un moteur (16), l'espace d'émission en éventail (T1, T2, T1E) et l'espace de réception en éventail (R1, R2, R1E) ;
le procédé étant **caractérisé par** les étapes consistant à :
commander le moteur (16) en rotation à une première vitesse (V1) donnée lorsqu'une détection sous-marine est effectuée et à une seconde vitesse (V2), plus rapide que la première vitesse (V1), lorsque la détection sous-marine n'est pas effectuée ; et
commander le moteur (16) en rotation dans un premier sens donné dans les deux cas, lorsque la détection sous-marine est effectuée et lorsque la détection sous-marine n'est pas effectuée.
